(19) Europäisches Patentamt / European Patent Office / Office européen des brevets

(11) **EP 4 447 538 A1**

(12) **DEMANDE DE BREVET EUROPEEN**

(43) Date de publication:
**16.10.2024 Bulletin 2024/42**

(21) Numéro de dépôt: **24169362.1**

(22) Date de dépôt: **10.04.2024**

(51) Classification Internationale des Brevets (IPC):
**H04W 28/02** *(2009.01)*    **H04W 28/12** *(2009.01)*

(52) Classification Coopérative des Brevets (CPC):
**H04W 28/0231; H04W 28/12**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **13.04.2023 FR 2303684**

(71) Demandeur: **Orange**
**92130 Issy-les-Moulineaux (FR)**

(72) Inventeurs:
• **SAAD, Joe**
**92326 Chatillon (FR)**
• **YASSIN, Mohamad**
**92326 Chatillon (FR)**
• **COSTANZO, Salvatore**
**92326 Chatillon (FR)**

(54) **PROCÉDÉS DE CONFIGURATION ET DE COMMUNICATION, ENTITÉ D'UN RÉSEAU DE TÉLÉCOMMUNICATIONS ET ÉQUIPEMENT UTILISATEUR**

(57) L'invention concerne un procédé de configuration, par une entité (2) d'un réseau de télécommunications, d'un équipement utilisateur (3) connecté à au moins un service offert par le réseau, ledit procédé comprenant :
- une étape de détermination d'un délai d'inactivité à l'expiration duquel ledit équipement utilisateur active une partie de bande passante définie par défaut en fonction d'une estimation d'un trafic associé audit équipement utilisateur relatif audit au moins un service ; et
- une étape d'envoi audit équipement utilisateur, dans au moins un message de configuration, dudit délai d'inactivité et d'un indicateur désignant ladite partie de bande passante définie par défaut, ladite partie de bande passante définie par défaut correspondant à une partie de bande passante affectée audit équipement utilisateur pour transmettre un trafic relatif à un service prioritaire parmi ledit au moins un service.

[Fig 2]

EP 4 447 538 A1

**Description**

**Technique antérieure**

L'invention appartient au domaine général des télécommunications.

Elle s'inscrit plus particulièrement dans le contexte d'un réseau de télécommunications offrant la possibilité à un équipement utilisateur (ou UE pour « User Equipment » en anglais) de ce réseau de recevoir ou d'émettre des données sur une partie seulement de la bande passante allouée par le réseau à la cellule à laquelle est rattaché cet équipement utilisateur.

Une telle fonctionnalité, également connue sous le nom de BWP pour « BandWidth Part » en anglais, a été introduite notamment dans le contexte d'un réseau 5G (i.e. de 5ème Génération) et plus particulièrement, de la nouvelle interface radio 5G NR (pour « New Radio » en anglais) définie par le standard 3GPP à compter de la Release 15. Elle permet d'adapter dynamiquement la bande passante sur laquelle des données associées à un UE sont transmises (i.e. envoyées ou reçues par l'UE) via le réseau, et incidemment la numérologie utilisée par l'UE sur cette bande. Par numérologie, on entend dans le contexte d'un schéma de transmission de type OFDM (pour « Orthogonal Frequency Division Multiplexing » en anglais) tel que celui adopté par la technologie d'accès radio 5G NR, l'espacement entre les sous-porteuses et la longueur du préfixe cyclique, ou de façon équivalente, la durée d'un symbole OFDM.

L'utilisation d'une unique numérologie comme dans les réseaux 4G ou LTE (pour « Long Term Evolution » en anglais), à savoir un espacement de 15kHZ entre les sous-porteuses et une longueur de préfixe cyclique approximativement de 4.7µs, est difficilement envisageable dans le contexte d'un réseau 5G, en raison notamment des multiples scénarios de déploiement envisagés, que ce soit en termes de dimensions des cellules, des bandes de fréquences allouées, des effets de propagation en résultant (comme par exemple l'étalement des retards (ou « delay spread » en anglais)), des services hétérogènes proposés en 5G (et des contraintes très diverses en découlant), etc. La technologie d'accès radio 5G NR a donc été conçue pour apporter une certaine flexibilité en la matière et supporter plusieurs numérologies pour une même fréquence porteuse, comme illustré dans la table 1 ci-dessous.

[Table 1]

| Numérologie $\mu$ | 0 | 1 | 2 | 3 | 4 |
|---|---|---|---|---|---|
| Espacement $\Delta f$ entre les sous-porteuses (SCS ou « SubCarrier Spacing » en anglais) (kHz) | 15 | 30 | 60 | 120 | 240 |
| Durée $T_u$ d'un symbole utile ($\mu$s) | 66.7 | 33.3 | 16.7 | 8.33 | 4.17 |
| Longueur $T_{CP}$ approximative du préfixe cyclique ($\mu$s) | 4.7 | 2.3 | 1.2 | 0.59 | 0.29 |
| Durée totale $T_u+T_{CP}$ d'un symbole OFDM ($\mu$s) | 71.35 | 35.68 | 17.84 | 8.92 | 4.46 |
| Durée d'un slot (14 symboles OFDM) ou TTI (pour « Transmission Time Interval » en anglais) (ms) | 1 | 0.5 | 0.25 | 0.125 | 0.0625 |

L'utilisation de ces multiples numérologies permet avantageusement de répondre aux contraintes diverses et variées (aussi désignées par SLA pour « Service Level Agreement » en anglais) en termes de latence, de débit (ou « throughput » en anglais) et de fiabilité, imposées par les différentes catégories de services que les réseaux 5G permettent d'offrir. Ces différentes catégories de services comprennent notamment :

- des services de type eMBB (pour « enhanced Mobile Broadband » en anglais) s'appuyant sur des débits de données très élevés pour proposer de nouvelles expériences aux utilisateurs (ex. réalité virtuelle, réalité augmentée, diffusion vidéo HD, etc.) ;
- des services de type uRLLC (pour « ultra Reliable Low Latency Communication » en anglais), qui ont des exigences strictes en matière de latence et de fiabilité des communications (ex. services de gestion à distance, robots industriels, téléchirurgie) ;
- des services de type mMTC (pour « massive Machine Type Communication » en anglais), qui incluent notamment l'Internet des Objets (ou « IoT » pour « Internet of Things » en anglais), et qui ont des exigences élevées en termes de densité de déploiement notamment (ex. ville connectée, agriculture connectée, etc.) ;
- des services de type V2X (pour « Vehicle to Everything » en anglais), permettant à un véhicule d'échanger des informations avec un autre véhicule, une infrastructure, au réseau et/ou un piéton. Les services V2X incluent des services de sécurité (ou « safety services » en anglais), qui ont pour but par exemple de minimiser les accidents, les risques des passagers ou des utilisateurs des routes (ex. service d'aide à la conduite ou de conduite autonome), et qui requièrent une latence très faible (inférieure à quelques millisecondes) et une fiabilité de transmission proche de 100%, et des services autres (ou « non-safety services » en anglais) visant davantage à améliorer les conditions de trafic, à minimiser l'influence de la congestion des routes, à améliorer le confort des passagers du véhicule, etc., et qui ont certes besoin de débits de transmission élevés mais peuvent tolérer une certaine latence et une fiabilité moins importante ; et

- des services de type HMTC (pour « High performance Machine Type Communications » en anglais), qui comme pour les services de type mMTC, ont des exigences élevées en termes de densité de déploiement (et donc de disponibilité des ressources pour communiquer), mais également de faible latence et de débits de transmission élevés.

Ainsi, par exemple, comme l'illustre la table 1, une numérologie élevée (par exemple correspondant à un espacement de 120kHz entre les sous-porteuses) permet de réduire la durée d'un intervalle de transmission ou TTI, et incidemment la latence : elle est donc particulièrement bien adaptée aux services uRLLC. A l'inverse, une numérologie moins élevée permet d'atteindre un débit plus élevé et est particulièrement bien adaptée aux services eMBB.

Comme évoqué précédemment, la technologie d'accès radio 5G NR permet à un UE, via la fonctionnalité BWP, d'utiliser une bande passante plus étroite que la bande passante totale allouée par une réseau 5G à la cellule dans laquelle se trouve l'UE. Cette bande passante plus étroite correspond à une partie (désignée par BWP dans la suite) de la bande passante totale allouée par le réseau à la cellule. Compte-tenu des largeurs de bande envisagées en 5G (jusqu'à 400 MHz pour une seule porteuse), le recours à cette fonctionnalité permet avantageusement d'une part, de s'adapter à des UE disposant de capacités réduites en termes de largeur de bande supportée et/ou qu'ils peuvent surveiller, et d'autre part, de réduire la complexité des traitements réalisés par les UE (ex. surveillance et décodage des canaux de contrôle) et ainsi la puissance qu'ils consomment.

Chaque BWP est caractérisée par une numérologie (espacement de sous-porteuse et longueur de préfixe cyclique) et par un nombre de blocs physiques de ressources ou PRB (pour « Physical Resource Block » en anglais) consécutifs respectant cette numérologie. Elle commence à un certain bloc de ressource commun (ou CRB pour « Common Ressource Block » en anglais) dont l'emplacement est identifié par rapport à un CRB servant de référence à toutes les numérologies, aussi appelé point de référence A (ou « Reference point A » en anglais). Des BWP différentes peuvent utiliser la même numérologie mais avoir des largeurs de bande différentes.

Il convient de noter que dans le contexte 5G NR, un bloc de ressource RB ou « Resource Block » (tel qu'un PRB ou un CRB) est un élément défini dans le domaine fréquentiel et constitué de 12 sous-porteuses consécutives. L'étalement fréquentiel d'un RB dépend donc de la numérologie considérée : ainsi par exemple, 2 RB consécutifs pour une numérologie basée sur un espacement $\Delta f$ entre les sous-porteuses occupent la même bande de fréquences qu'un RB pour une numérologie basée sur un espacement $2\Delta f$ entre les sous-porteuses. Un PRB est donc la plus petite unité radio attribuée à un UE dans le contexte 5G NR.

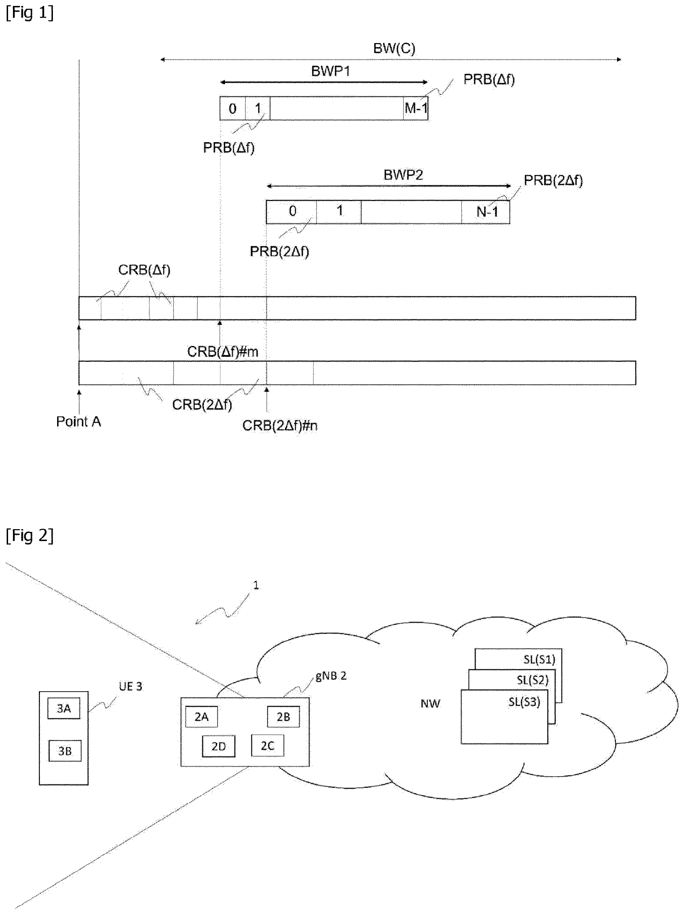

La **figure 1** illustre de façon schématique la notion de BWP. Sur cette figure, on considère deux parties de bande passante notées BWP1 et BWP2, définies au sein de la bande passante BW associée à une porteuse C allouée à une cellule d'un réseau 5G. Les parties de bande BWP1 et BWP2 sont, dans l'exemple de la figure 1, associées respectivement à deux numérologies distinctes correspondant à des espacements respectifs entre les sous-porteuses $\Delta f$ et $2\Delta f$. On note PRB($\Delta f$), respectivement CRB($\Delta f$), et PRB($2\Delta f$), respectivement CRB($2\Delta f$), les PRB, respectivement les CRB, correspondant aux espacements $\Delta f$ et $2\Delta f$ entre les sous porteuses. La partie de bande BWP1 commence au bloc CBR($\Delta f$)#m, par rapport au point de référence A, et est constituée de M PRB($\Delta f$) consécutifs correspondant à un espacement $\Delta f$ entre les sous-porteuses ; la partie de bande BWP2 commence au bloc CBR($2\Delta f$)#n et est constituée de N PRB($2\Delta f$) consécutifs correspondant à un espacement $2\Delta f$ entre les sous-porteuses, M et N désignant deux entiers supérieurs ou égaux à 1.

Conformément au standard 3GPP, au niveau d'un UE, quatre BWP peuvent être configurées en voie descendante (ou DL pour « DownLink » en anglais) et quatre BWP peuvent être configurées en voie montante (ou UL pour « UpLink » en anglais) pour des transmissions de données associées à l'UE. L'expression « transmission de données associées à l'UE » couvre ici de manière générale la réception de données par l'UE et/ou l'émission de données par l'UE. Dans la suite de la description, le terme BWP peut désigner indifféremment une BWP UL ou une BWP DL selon si on considère l'émission d'un flux sortant par l'UE ou la réception d'un flux entrant par l'UE.

En fonction du ou des services utilisés par un UE, l'activation d'une BWP peut s'avérer plus pertinente qu'une autre, notamment en raison de la numérologie associée à cette BWP. En effet, comme souligné précédemment, les numérologies plus élevées sont particulièrement bien adaptées aux services requérant des latences faibles, comme par exemple les services uRLLC, tandis que les numérologies moins élevées sont plus adaptées aux services eMBB requérant de très hauts débits. Il n'est donc pas optimal d'utiliser une même numérologie pour deux services présentant des contraintes (ou SLA) différentes.

Or un UE d'un réseau 5G peut être connecté ou autorisé à se connecter simultanément à des services différents. Le standard 3GPP a par exemple introduit la notion de « network slicing » en anglais (ou découpage d'un réseau en tranches) selon laquelle un réseau physique 5G peut être découpé en plusieurs tranches logiques (ou « slices » en anglais), chaque tranche logique étant associée à un service distinct, caractérisé par un SLA qui lui est propre, et disposant de ressources radio dédiées. Un même UE peut être connecté à 8 tranches de réseau simultanément et donc accéder simultanément à des services distincts. Il convient de noter qu'un UE d'un réseau 5G peut être connecté à plusieurs services distincts y compris en l'absence de network slicing.

Conformément au standard 3GPP, bien que plusieurs BWP puissent être configurées au niveau de l'UE, une seule BWP peut être active (autrement dit, utilisée pour la transmission de données associées à l'UE) à un instant donné en UL ou en DL. Un UE peut toutefois basculer d'une BWP à une autre, autrement dit activer une nouvelle BWP en remplacement de la BWP active courante.

Un tel basculement peut être décidé par le réseau (station de base à laquelle est rattaché l'UE), par exemple en vue de satisfaire les exigences de qualité de service (QoS pour « Quality of Service » en anglais) d'un nouveau service requis par l'UE, la nouvelle BWP étant considérée comme mieux adaptée en raison de sa numérologie que la BWP active courante pour transmettre les flux de données relatifs à ce service. Il est déclenché par l'envoi par la station de base, sur un canal de contrôle PDCCH (pour « Physical Downlink Control CHannel » en anglais), d'informations de contrôle DCI (pour « Downlink Control Information » en anglais) destinées à l'UE, au format 0_1 (pour l'UL) ou 1_1 (pour le DL), et comprenant un indicateur de BWP (ou « Bandwidth Part indicator » en anglais) désignant la nouvelle BWP à activer par l'UE.

L'UE peut également, lorsqu'il ne détecte plus d'inactivité dans sa BWP active courante, basculer de façon automatique vers une BWP définie par défaut avec laquelle il a été précédemment configuré, à l'expiration d'un délai dit d'inactivité (« inactivity timer » en anglais). La valeur du délai d'inactivité est comprise entre 2 ms et 2560 ms.

Le standard 3GPP ne spécifie toutefois pas de mécanisme permettant de gérer efficacement une connexion d'un équipement utilisateur à de multiples services auxquels on souhaite affecter des BWP différentes en vue d'optimiser la transmission du trafic associé à ces services et satisfaire leurs SLA respectifs. En effet, au regard des mécanismes de basculement précités, si l'on souhaite changer de BWP à chaque transmission de données relatives à un service ayant des exigences différentes, il est nécessaire de signaler ce changement à l'UE dans un canal de contrôle PDCCH au moyen d'informations de contrôle DCI. Or, comme évoqué précédemment, l'UE est configuré pour surveiller de façon périodique le canal de contrôle PDCCH. Il est donc nécessaire d'attendre la prochaine période de surveillance du canal de contrôle PDCCH par l'UE (plusieurs slots, c'est-à-dire plusieurs millisecondes) pour pouvoir déclencher le changement de BWP au niveau de ce dernier. Une telle attente peut s'avérer préjudiciable pour un service prioritaire tel qu'un service uRLLC qui tolère une latence maximale d'une milliseconde. Il se peut ainsi que des paquets de données relatifs à ce service uRLLC, ordonnancés pour respecter cette latence maximale, ne puissent pas être transmis sur les ressources qui leur ont été alloués. Il s'ensuit une dégradation du service uRLLC.

Il existe donc un besoin permettant de mettre en oeuvre efficacement une fonctionnalité BWP telle que définie par le standard 3GPP, dans un réseau offrant la possibilité à un équipement utilisateur d'être connecté à plusieurs services hétérogènes ayant typiquement des priorités et/ou des exigences distinctes en matière de qualité de service.

**Exposé de l'invention**

L'invention répond notamment au besoin évoqué en proposant un procédé de configuration, par une entité d'un réseau de télécommunications, d'un équipement utilisateur connecté à au moins un service offert par le réseau, ledit procédé comprenant :

- une étape de détermination d'un délai d'inactivité à l'expiration duquel ledit équipement utilisateur active une partie de bande passante définie par défaut en fonction d'une estimation d'un trafic associé audit équipement utilisateur relatif audit au moins un service ; et
- une étape d'envoi audit équipement utilisateur, dans au moins un message de configuration, dudit délai d'inactivité et d'un indicateur désignant ladite partie de bande passante définie par défaut, ladite partie de bande passante définie par défaut correspondant à une partie de bande passante affectée audit équipement utilisateur pour transmettre un trafic relatif à un service prioritaire parmi ledit au moins un service.

Corrélativement, l'invention vise aussi une entité d'un réseau de télécommunications comprenant :

- un module de détermination, configuré pour déterminer un délai d'inactivité à l'expiration duquel un équipement utilisateur, connecté à au moins un service offert par ledit réseau, active une partie de bande passante définie par défaut en fonction d'une estimation d'un trafic associé audit équipement utilisateur relatif audit au moins un service ; et
- un module d'envoi, configuré pour envoyer audit équipement utilisateur, dans au moins un message de configuration, ledit délai d'inactivité et un indicateur désignant ladite partie de bande passante définie par défaut, ladite partie de bande passante définie par défaut correspondant à une partie de bande passante affectée audit équipement utilisateur pour transmettre un trafic relatif à un service prioritaire parmi ledit au moins un service.

Il convient de noter que l'invention s'applique aussi bien en voie montante (UL) qu'en voie descendante (DL). Plus particulièrement, lorsque l'estimation du trafic associé à l'équipement utilisateur concerne le trafic montant, la BWP définie par défaut est une BWP définie par défaut pour le trafic montant, donc à appliquer en UL. Il en est de même pour le délai d'inactivité déterminé conformément à l'invention. Inversement, lorsque l'estimation du trafic associé à l'équipement utilisateur concerne le trafic descendant, la BWP définie par défaut et le délai d'inactivité déterminé correspondent respectivement à une BWP définie par défaut pour le trafic descendant et un délai d'inactivité avant de basculer vers cette BWP définie par défaut pour le trafic descendant, et donc à appliquer en DL.

L'entité du réseau de télécommunications est par exemple une station de base du réseau (aussi appelée gNB dans le contexte d'un réseau 5G). Il peut s'agir d'une entité matérielle ou d'une entité logicielle, qui peut être répartie sur une ou plusieurs fonctions réseaux ou être hébergée par un ou plusieurs équipements matériels.

De façon connue en soi, un service prioritaire est un service qui a des exigences élevées en termes de latence (latence maximale inférieure à un seuil donné, par exemple 1 ms). Il s'appuie généralement sur la transmission de flux de données auxquels on associe une priorité élevée (supérieure à un seuil donné) ou un profil QoS caractérisé par un indicateur de QoS élevé. Un tel indicateur de QoS est par exemple une valeur 5QI (pour « 5G QoS Identifier » en anglais), un indicateur QCI (pour « QoS Class Identifier » en anglais), etc. Ainsi par exemple, un service uRLLC est un service prioritaire, tandis qu'un service eMBB est un service considéré comme un service non prioritaire.

L'invention propose donc d'une part, de faire coïncider la BWP définie par défaut avec la BWP affectée au service le plus exigeant en termes de latence (service prioritaire) auquel l'équipement utilisateur est connecté, et d'autre part, d'ajuster le délai d'inactivité à l'issue duquel l'équipement utilisateur bascule sur la BWP définie par défaut en fonction du trafic associé à cet équipement utilisateur. L'idée sous-jacente sur laquelle s'appuie l'invention est de privilégier la transmission du trafic relatif au service prioritaire qui a des contraintes élevées en termes de latence, en permettant un basculement sans délai vers la BWP affectée à ce service.

En effet, en fixant comme BWP par défaut la BWP affectée au service prioritaire, dès qu'une absence de trafic est détectée sur une période allant au-delà du délai d'inactivité, l'équipement utilisateur bascule automatiquement vers cette BWP. De cette sorte, si du trafic relatif au service prioritaire se présente pour l'équipement utilisateur, celui-ci peut être transmis sans délai sur la BWP qui a été avantageusement choisie pour répondre au SLA du service. Il n'est pas nécessaire d'attendre la transmission d'informations de contrôle (ex. informations DCI) demandant ce changement pour pouvoir utiliser la BWP affectée au service prioritaire.

En outre, le délai d'inactivité est optimisé pour permettre à l'équipement utilisateur de basculer plus rapidement vers cette BWP. A cet effet, l'invention propose de tenir compte de l'estimation du trafic à venir associé à l'équipement utilisateur. Cette estimation comprend par exemple, pour chaque service auquel est connecté ledit équipement utilisateur :

- une priorité associée audit service ;
- une volumétrie d'un trafic relatif audit service ;
- des informations relatives à un ordonnancement des paquets de données relatifs audit service et à une partie de bande passante affectée à ce service pour une transmission desdits paquets de données.

Grâce à cette estimation du trafic en prévision pour l'équipement utilisateur, l'entité du réseau peut déterminer le délai d'inactivité optimal à appliquer pour garantir que le service prioritaire puisse être servi dans le respect des conditions de son SLA, notamment en matière de latence.

Il convient de noter que l'invention peut être avantageusement mise en oeuvre de sorte à adapter dynamiquement la BWP par défaut et le délai d'inactivité appliqué par l'équipement utilisateur (ceux-ci pouvant alors évoluer dans le temps en fonction du contexte de l'équipement utilisateur), ou en variante, elle peut être exécutée pour déterminer la BWP par défaut et le délai d'inactivité avec lesquels configurer l'équipement utilisateur lors de l'établissement de sa connexion avec une station de base du réseau.

Grâce à l'invention, un équipement utilisateur connecté à plusieurs services dont un service prioritaire est assuré que le trafic relatif à ce service prioritaire est transmis avec une BWP et une numérologie adaptées à ses contraintes et dans le respect de la latence maximale qu'il supporte. Il convient de noter que la mise en oeuvre de l'invention peut se traduire par un délai supplémentaire pour transmettre le trafic relatif aux autres services non prioritaires auquel l'équipement utilisateur est le cas échéant connecté. Toutefois, ces services étant non prioritaires, ils peuvent tolérer un tel délai supplémentaire sans que cela ait un impact sur leurs performances.

L'invention est très simple à mettre en oeuvre. En effet, elle s'appuie sur des mécanismes déjà im-plémentés par l'équipement utilisateur et par le réseau (basculement vers une BWP par défaut à l'expiration d'un délai d'inactivité, configuration de l'équipement utilisateur avec une BWP par défaut, etc.), qui sont adaptés pour les besoins de l'invention moyennant une faible complexité.

Par exemple, l'estimation du trafic associé à un équipement utilisateur est une information dont dispose déjà le réseau pour organiser la transmission de ce trafic. Il en est de même pour la priorité associée à chaque service.

Par ailleurs, l'invention ne requiert pas de modification des formats des messages existants ou des informations de contrôle DCI pour sa mise en oeuvre : la BWP définie par défaut de même que le délai d'inactivité peuvent être aisément fournis à l'équipement utilisateur en utilisant des champs normalisés d'un message conforme au protocole RRC (appelé ici message RRC), tels que le champ defaultDownlinkBWP-Id ou defaultUplinkBWP-Id pour la BWP par défaut en DL ou en UL, et le champ bwp-InactivityTimer pour le délai d'inactivité. Ces champs sont décrits notamment dans le document 3GPP TS 38.331 intitulé « Technical Spécification Group Radio Access Network; NR; Radio Resource Control (RRC) protocol spécification ; Release 17 », v17.4.0 (2023-03). Ainsi, dans un mode particulier de réalisation, ledit au moins un message de configuration est un message RRC.

Bien entendu, d'autres types de messages de configuration peuvent être utilisés en variante pour communiquer à l'équipement utilisateur la BWP définie par défaut et le délai d'inactivité déterminés au moyen de l'invention. Il convient par ailleurs de noter que la BWP définie par défaut et le délai d'inactivité ne sont pas nécessairement transmis dans les mêmes messages. En outre, ils ne sont pas nécessairement mis à jour en même temps et donc, par conséquent, ils ne sont pas nécessairement transmis à la même fréquence.

L'invention est de plus compatible avec la contrainte imposée par le standard 3GPP selon laquelle un équipement utilisateur ne peut avoir qu'une unique BWP active à un instant donné (il convient toutefois de noter que l'invention s'applique également en l'absence de cette contrainte). Elle permet sous cette contrainte, d'optimiser la transmission du trafic associé à un équipement utilisateur connecté à de multiples services y compris lorsque ces services incluent un service prioritaire.

Aucune limitation n'est attachée au nombre ni aux types de services auxquels s'applique l'invention. Les multiples services auxquels est connecté l'équipement utilisateur peuvent comprendre par exemple un ou plusieurs services parmi :

- un service « ultra Reliable Low Latency Communication », uRLLC ;
- un service « enhanced Mobile BroadBand », eMBB ;
- un service « massive Machine Type Communication », mMTC ;
- un service « Vehicule to Everything », V2X ;
- un service « High performance Mobile Type Communication », HMTC.

Les services uRLLC et V2X sont considérés comme prioritaires.

Comme mentionné précédemment, l'invention vise à assurer que, tout en respectant les contraintes de la fonctionnalité BWP, le service prioritaire soit servi sans latence. Plusieurs stratégies peuvent être appliquées pour déterminer un délai d'inactivité optimisé à cette fin.

Par exemple, dans un mode particulier de réalisation dans lequel l'estimation du trafic indique une absence de trafic, lors de l'étape de détermination le délai d'inactivité est fixé à une valeur minimum déterminée.

Par exemple, cette valeur minimum déterminée est 2 ms comme défini dans le standard 3GPP. Mais bien entendu, d'autres valeurs peuvent être envisagées, inférieures ou supérieures à 2ms.

Ce mode de réalisation exploite le fait qu'il n'y a pas, sur la période de temps à venir (celle sur laquelle est estimée le trafic), de trafic à transmettre pour l'équipement utilisateur. Dans ces circonstances, un basculement rapide vers la BWP par défaut associée au service prioritaire ne génère aucun délai supplémentaire pour les autres services puisqu'il n'y a pas de trafic à transmettre sur cette période. En outre, si du trafic pour le service prioritaire se présente, il pourrait être traité sans délai indu puisque la BWP affectée à ce service est déjà activée.

Dans un autre mode de réalisation, le délai est fixé à une valeur minimum déterminée si une prédiction du trafic sur une période de temps déterminée confirme en outre l'absence de trafic.

Une telle prédiction peut être par exemple réalisée avec un algorithme d'apprentissage automatique (ML ou « Machine Learning » en anglais), ou d'intelligence artificielle (AI pour « Artificial Intelligency » en anglais), sur une période de temps allant au-delà de la période considérée pour l'estimation du trafic. Ce mode de réalisation permet de confirmer la pertinence du choix d'un délai d'inactivité minimum à l'égard des autres services.

Le choix de la valeur minimum pour le délai d'inactivité dans ces modes de réalisation offre un compromis entre simplicité d'implémentation et efficacité du mécanisme de basculement vers la BWP définie par défaut pour les services prioritaires. Toutefois, on pourrait envisager de choisir le délai d'inactivité de façon différente en l'absence de trafic, par exemple en tenant compte des prédictions de trafic au-delà de la période sur laquelle l'estimation du trafic est considérée. En fonction de ces prédictions, une valeur plus élevée pourrait être choisie pour le délai d'inactivité en tenant compte des périodes d'activité et d'inactivité observées le cas échéant dans ces prédictions de trafic pour le service prioritaire et pour les autres services.

Dans un mode particulier de réalisation, si ladite estimation du trafic indique une activité, lors de l'étape de détermination, le délai d'inactivité est fixé en fonction d'au moins un indicateur de performance dudit équipement utilisateur.

Cet indicateur de performance peut être notamment une puissance consommée par l'équipement utilisateur.

Ainsi, par exemple, si la puissance consommée par l'équipement utilisateur atteint ou dépasse un seuil donné, lors de l'étape de détermination, le délai d'inactivité est maintenu à sa valeur courante.

Cette stratégie permet, en favorisant l'inactivité de l'équipement utilisateur, de préserver la puissance consommée par ce dernier qui a déjà atteint son maximum, et donc incidemment ses ressources dont notamment sa batterie.

Selon un autre exemple, si la puissance consommée par l'équipement utilisateur est inférieure à un seuil donné, lors de l'étape de détermination, le délai d'inactivité est augmenté par rapport à sa valeur courante. On peut par exemple envisager de l'augmenter de quelques millisecondes.

L'augmentation du délai d'inactivité permet de tenir compte de la présence de trafic.

Bien entendu ces exemples ne sont donnés qu'à titre illustratif, et d'autres stratégies pourraient être envisagées de même que d'autres facteurs pourraient être pris en compte pour déterminer le délai d'inactivité optimal, comme par exemple la localisation de l'équipement utilisateur, le contexte dans lequel il se trouve, un indicateur de performance du réseau (ex. latence de bout-en-bout des services non prioritaires) etc.

Dans un autre mode de réalisation, lors de l'étape de détermination, le délai d'inactivité est déterminé au moyen d'un algorithme ML ou d'AI (par exemple un algorithme d'apprentissage par renforcement, ou par renforcement profond), d'un modèle mathématique ou d'une heuristique.

Dans un mode particulier de réalisation, les étapes de détermination et d'envoi sont réitérées périodiquement.

Ce mode de réalisation offre une flexibilité supplémentaire : il permet de réviser si besoin la BWP par défaut et le délai d'inactivité en fonction de l'évolution du trafic et le cas échéant des services auxquels l'équipement utilisateur est connecté.

Il convient toutefois de noter que la BWP par défaut n'est pas nécessairement révisée à chaque période, notamment lorsque l'équipement utilisateur est toujours connecté au même service prioritaire.

On peut par ailleurs envisager, dans un mode particulier de réalisation, d'avoir une période de répétition de ces étapes configurable par l'entité du réseau, par exemple en fonction du contexte dans lequel se trouve l'équipement utilisateur ou des services auxquels il est connecté.

En variante, les étapes de détermination et d'envoi peuvent être déclenchées sur détection d'un événement particulier, comme par exemple, la connexion de l'équipement utilisateur à un nouveau service, l'apparition de trafic entrant ou sortant associé à l'équipement utilisateur, etc.

Au vu de ce qui précède, l'invention s'appuie sur l'entité du réseau mettant en oeuvre le procédé de configuration selon l'invention pour choisir de façon optimisée la BWP par défaut et le délai d'inactivité, mais également sur l'équipement utilisateur lui-même.

Ainsi, selon un autre aspect, l'invention vise un procédé de communication, par un équipement utilisateur d'un réseau de télécommunications connecté à au moins un service offert par le réseau, ledit procédé de communication comprenant :

- une étape de réception d'au moins un message de configuration en provenance d'une entité du réseau, ledit au moins un message de configuration comprenant un indicateur d'une partie de bande définie par défaut et un délai d'inactivité à l'expiration duquel ledit équipement utilisateur doit activer ladite partie de bande passante définie par défaut, ledit délai d'inactivité ayant été déterminé par ladite entité du réseau en fonction d'une estimation d'un trafic associé audit équipement utilisateur relatif audit au moins un service, et ladite partie de bande passante définie par défaut correspondant à une partie de bande passante affectée audit équipement utilisateur pour transmettre un trafic relatif à un service prioritaire parmi ledit au moins un service ; et
- une étape d'application de ladite partie de bande passante définie par défaut et dudit délai d'inactivité.

Corrélativement, l'invention vise aussi un équipement utilisateur d'un réseau de télécommunications comprenant :

- un module de réception, configuré pour recevoir au moins un message de configuration en provenance d'une entité du réseau, ledit au moins un message de configuration comprenant un indicateur d'une partie de bande définie par défaut et un délai d'inactivité à l'expiration duquel ledit équipement utilisateur doit activer ladite partie de bande passante définie par défaut, ledit délai d'inactivité ayant été déterminé par ladite entité du réseau en fonction d'une estimation d'un trafic associé audit équipement utilisateur relatif audit au moins un service, et ladite partie de bande passante définie par défaut correspondant à une partie de bande affectée audit équipement utilisateur pour transmettre un trafic relatif à un service prioritaire parmi ledit au moins un service ; et
- un module d'application, configuré pour appliquer ladite partie de bande passante définie par défaut et ledit délai d'inactivité.

Selon un autre aspect encore, l'invention vise un système de communication comprenant :

- au moins une entité d'un réseau de télécommunications selon l'invention ; et
- au moins un équipement utilisateur selon l'invention, rattaché à ladite au moins une entité.

Le procédé de communication, l'équipement utilisateur, et le système de communication selon l'invention présentent les mêmes avantages cités précédemment que le procédé de configuration et l'entité du réseau selon l'invention. Ils s'appliquent également en voie montant et en voie descendante, comme évoqué précédemment pour le procédé de configuration et l'entité du réseau.

Dans un mode particulier de réalisation, les procédés de configuration et de communication sont mis en oeuvre par un ordinateur.

L'invention vise également un programme d'ordinateur sur un support d'enregistrement, ce programme étant susceptible d'être mis en oeuvre dans un ordinateur ou plus généralement dans une entité d'un réseau de télécommunications conforme à l'invention et comportant des instructions adaptées à la mise en oeuvre d'un procédé de configuration tel que décrit ci-dessus.

L'invention vise également un programme d'ordinateur sur un support d'enregistrement, ce programme étant susceptible d'être mis en oeuvre dans un ordinateur ou plus généralement dans équipement utilisateur conforme à l'invention et comportant des instructions adaptées à la mise en oeuvre d'un procédé de communication tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions d'un programme d'ordinateur tel que mentionné ci-dessus.

Le support d'information ou d'enregistrement peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple un disque dur, ou une mémoire flash.

D'autre part, le support d'information ou d'enregistrement peut être un support transmissible tel qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, le support d'information ou d'enregistrement peut être un circuit intégré dans lequel un programme est incorporé, le circuit étant adapté pour exécuter ou pour être utilisé dans l'exécution des procédés de configuration et de communication selon l'invention.

On peut également envisager, dans d'autres modes de réalisation, que les procédés de configuration et de communication, l'entité du réseau, l'équipement utilisateur et le système de communication selon l'invention présentent en combinaison tout ou partie des caractéristiques précitées.

**Brève description des dessins**

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1, déjà décrite, représente des parties de bande passante (ou BWP) définies à partir d'une bande passante nominale allouée à un réseau ;
[Fig. 2] la figure 2 représente un système de communication dans un réseau de télécommunications, conforme à l'invention, dans un mode particulier de réalisation ;
[Fig. 3] la figure 3 représente schématiquement l'architecture matérielle d'un ordinateur sur laquelle s'appuient une entité du réseau et un équipement utilisateur conformes à l'invention, appartenant au système de communication de la figure 2 ;
[Fig. 4] la figure 4 représente, sous forme d'ordinogramme, les principales étapes d'un procédé de configuration selon l'invention, telles qu'elles sont mises en oeuvre par une entité du réseau conforme à l'invention appartenant au système de communication de la figure 2 ;
[Fig. 5] la figure 5 représente, sous forme d'ordinogramme, les principales étapes d'un procédé de communication selon l'invention, telles qu'elles sont mises en oeuvre par un équipement utilisateur conforme à l'invention appartenant au système de communication de la figure 2 ;

[Fig. 6] ;

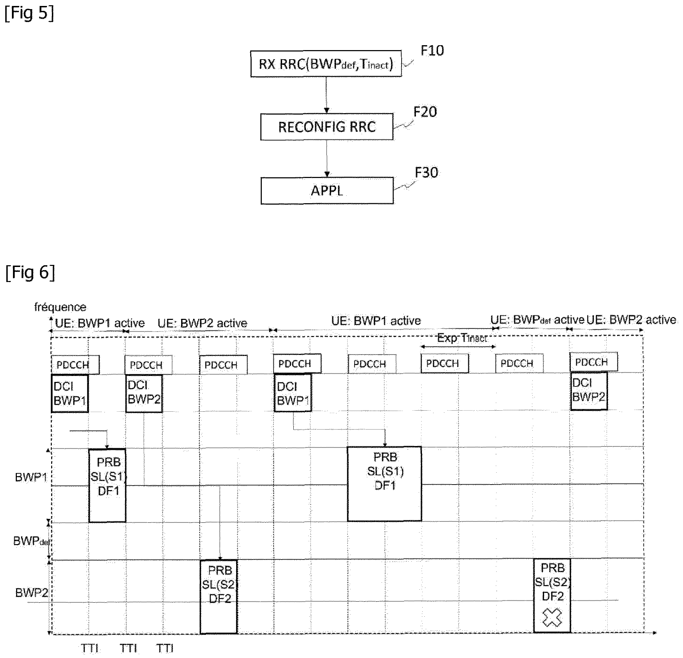

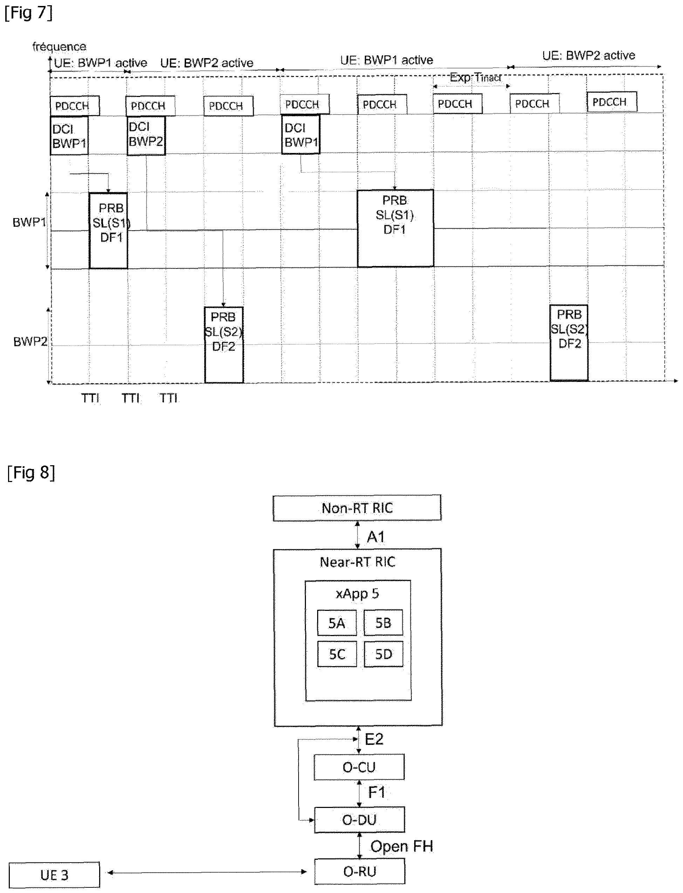

[Fig. 7] Les figures 6 et 7 illustrent sur un exemple le gain apporté par l'invention (figure 6 : sans l'invention ; figure 7 : avec l'invention) ; et

[Fig. 8] La figure 8 représente un mode de réalisation de l'invention s'appuyant sur une architecture Open-RAN.

## Description de l'invention

La **figure 2** représente, dans son environnement, un système 1 de communication, conforme à l'invention dans un mode particulier de réalisation.

Dans ce mode de réalisation, le système 1 comprend :

- au moins une entité 2 d'un réseau de télécommunications NW, conforme à l'invention ; et
- au moins un équipement utilisateur ou UE 3 du réseau de télécommunications NW, rattaché à ladite au moins une entité 2, et conforme à l'invention.

Dans la suite de la description et sur la figure 2, par souci de simplification, on considère une seule entité 2 et un seul équipement utilisateur 3 rattaché à cette entité 2.

Dans l'exemple de la figure 2, le réseau de télécommunications NW est un réseau 5G NR tel que défini par le standard 3GPP (aux adaptations près nécessaires à la mise en oeuvre de l'invention, décrites ci-après). Il met en oeuvre notamment la fonctionnalité BWP évoquée précédemment, permettant à un équipement utilisateur de n'utiliser qu'une partie de la bande passante totale allouée à la cellule à laquelle il est rattaché, que ce soit en DL pour recevoir des données et/ou en UL pour émettre des données.

Dans ce contexte et dans le mode de réalisation décrit ici, l'entité 2 conforme à l'invention est une station de base (aussi appelée gNode B ou gNB) du réseau NW, couvrant au moins une cellule CELL du réseau NW à laquelle l'UE 3 est rattaché et via laquelle l'UE 3 peut accéder aux services offerts par le réseau NW. On suppose ici que la cellule CELL est configurée avec au moins une fréquence porteuse CF à laquelle l'opérateur du réseau NW a alloué une bande passante BW(CF). Ainsi, la fonctionnalité BWP permet à l'UE 3 d'utiliser en transmission (en DL et/ou en UL) une partie seulement (BWP) de la bande passante BW(CF) associée à une certaine numérologie $\mu$ (désignée dans la suite par « partie de bande passante BWP/$\mu$ »), lorsqu'il est rattaché à la cellule CELL.

L'UE 3 est configuré initialement, au moment de l'établissement de la connexion entre l'UE 3 et la gNB 2, avec une BWP définie par défaut $BWP_{def(0)}/\mu_{def(0)}$ (pour l'UL, respectivement pour le DL), et un délai d'inactivité $T_{inact(0)}$ à l'issue duquel l'UE 3 bascule vers cette BWP définie par défaut $BWP_{def(0)}/\mu_{def(0)}$. Plus précisément, lors de la reconfiguration RRC, la gNB 2 envoie un message RRC à l'UE 3 comprenant un champ defaultUplinkBWP-Id pour l'UL, respectivement defaultDownlinkBWP-Id pour le DL, contenant un indicateur désignant la BWP définie par défaut $BWP_{def(0)}/\mu_{def(0)}$ à utiliser en UL, respectivement en DL, ainsi qu'un champ bwp-InactivityTimer, valorisé avec la valeur du délai d'inactivité $T_{inact(0)}$. Ces champs sont décrits plus en détail dans le document 3GPP TS 38.331 cité précédemment.

L'UE 3 est par ailleurs configuré pour, à chaque activation par l'UE 3 d'une BWP courante (pour l'UL, respectivement pour le DL) différente de la BWP définie par défaut (pour l'UL, respectivement pour le DL), déclencher un temporisateur pour une durée égale au délai d'inactivité avec lequel il est configuré. Si le temporisateur expire et qu'aucun trafic (UL, respectivement DL) associé à l'UE 3 n'est à transmettre, l'UE 3 bascule vers la BWP définie par défaut (pour l'UL, respectivement pour le DL). On note que des BWP différentes peuvent être définies par défaut en UL et en DL, de même que des délais d'inactivité différents.

Comme mentionné précédemment, en dehors de ce mécanisme de basculement vers la BWP définie par défaut, l'UE 3 est informé de la BWP et de la numérologie associée (BWP/$\mu$) à activer à un instant donné par l'intermédiaire d'informations de contrôle DCI destinées à l'UE 3 et envoyées par la gNB 2 dans un canal de contrôle PDCCH, diffusé en broadcast sur la cellule CELL. Les informations de contrôle DCI véhiculées dans les canaux de contrôle PDCCH peuvent prendre différents formats selon les éléments qu'elles transportent. Les informations de contrôle DCI selon un format 0_1 (dédié à l'UL) ou 1_1 (dédié au DL) contiennent outre la localisation des ressources en temps et en fréquence allouées en UL et/ou en DL à l'UE 3, un indicateur de la BWP à activer par celui-ci, cet indicateur désignant de façon univoque une BWP à activer par l'UE 3 et la numérologie associée à utiliser. Les formats 0_1 et 1_1 des informations de contrôle DCI et les éléments qu'ils contiennent, ainsi que les autres formats d'informations de contrôle DCI proposés par le standard 3GPP, sont décrits notamment dans le paragraphe 7.3 du document 3GPP TS 38.212 intitulé « Technical Spécification Group Radio Access Network ; NR ; Multiplexing and channel coding (Release 17) », v17.5.0, mars 2023.

Il convient de noter que l'invention peut s'appliquer dans d'autres contextes ou à d'autres architectures que celle décrite ici, comme par exemple dans un contexte Open-RAN (comme évoqué plus en détail ultérieurement) ou dans un réseau de future génération, ou encore dans un réseau propriétaire, dès lors que celui-ci implémente une fonctionnalité BWP permettant à un équipement utilisateur du réseau de n'utiliser qu'une partie seulement de la bande passante allouée à la cellule à laquelle il est rattaché pour transmettre (i.e. émettre et/ou recevoir) des données.

De façon connue en soi, le réseau de télécommunications NW permet d'offrir une pluralité de services à ses abonnés, chaque service étant associé à des contraintes spécifiques, notamment en termes de latence, de fiabilité de transmission, etc., définies par un SLA (pour « Service Level Agreement » en anglais). A titre illustratif, on considère ici pour le réseau NW, les services suivants :

- un service S1 de type eMBB (ex. réalité virtuelle, réalité augmentée, diffusion vidéo HD, etc.), exigeant des débits de transmission de données élevés ;
- un service S2 de type uRLLC (ex. service de conduite autonome ou de gestion à distance) exigeant une faible latence (inférieure à une milliseconde) et une fiabilité élevée de transmission des données ; et
- un service S3 de type mMTC (ex. IoT) ayant une exigence élevée en terme de densité de déploiement.

De façon connue en soi, le service S2 est considéré comme prioritaire, en raison de la faible latence qu'il supporte (inférieure à un seuil donné à savoir, une milliseconde). Les autres services sont considérés comme non prioritaires.

En outre, dans le mode de réalisation décrit ici, le réseau NW met en oeuvre un découpage en tranches ou « network slicing ». Chaque tranche SL ou « slice » est un sous-réseau logique s'appuyant sur l'infrastructure physique du réseau NW et auquel sont allouées des ressources spécifiques (ex. ressources matérielles, logicielle, etc.). Les différentes slices SL du réseau sont donc avantageusement isolées les unes des autres et disposent de ressources qui leur sont propres.

Chaque slice offre ici un service distinct et est identifiée par un identifiant de slice unique, tel que par exemple un identifiant S-NSSAI (pour « Single - Network Slice Sélection Assistance Information » en anglais) défini dans le standard 3GPP. Ainsi, dans l'exemple de la figure 2, la slice SL(S1) est configurée pour offrir le service S1 et identifiée par l'identifiant S-NSSAI1, la slice SL(S2) est configurée pour offrir le service S2 et identifiée par l'identifiant S-NSSAI2, et la slice SL(S3) est configurée pour offrir le service S3 et identifiée par l'identifiant S-NSSAI3. Il en résulte que selon cette configuration, non seulement le S-NSSAIn associée à une slice SL(Sn), n désignant un entier égal à 1, 2 ou 3 dans l'exemple envisagé, identifie de façon unique cette slice mais également le service Sn qu'elle offre.

On suppose ici, à titre illustratif, que l'UE 3 est connecté simultanément à plusieurs slices du réseau NW, et plus particulièrement aux slices SL(S1) et SL(S2) via lesquelles il peut accéder respectivement aux services S1 non prioritaire et S2 prioritaire.

Bien entendu, ces hypothèses ne sont pas limitatives en soi et cet exemple n'est donné qu'à titre illustratif. Ainsi, d'autres services peuvent être offerts par le réseau NW en complément ou en variante des services précités, comme par exemple un service de type V2x (qui peut, selon le scénario envisagé, requérir une latence inférieure à quelques millisecondes et une fiabilité proche de 100% (scénarios dits « Safety-related V2x » incluant la conduite autonome par exemple), ou en variante, un débit élevé, une latence plus élevée et une fiabilité faible (scénarios dits « Non-Safety-related V2x » incluent par exemple les divertissements mobiles à hauts débits), un service de type HMTC (requérant une faible latence, une haute disponibilité et des débits élevés), etc. Le réseau NW peut en outre offrir plusieurs services distincts de chaque catégorie.

Par ailleurs, l'UE 3 peut être connecté à un nombre différent de slices et/ou à des services différents. En effet, comme mentionné précédemment, conformément au standard 3GPP, un UE peut être connecté à une ou plusieurs slices (jusqu'à 8 simultanément).

Enfin, on peut également envisager que le réseau NW offre une pluralité de services présentant des contraintes différentes sans mettre en oeuvre de network slicing. Chaque service offert par le réseau NW est alors identifié de manière unique, par exemple à l'aide d'un identifiant de service.

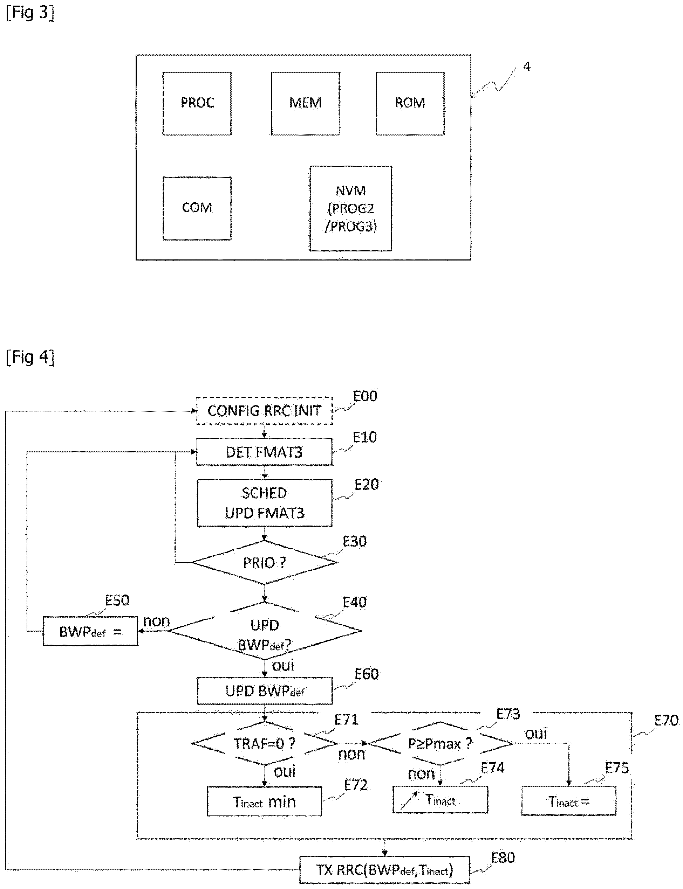

Dans le mode de réalisation décrit ici, la gNB 2 et l'UE 3 ont l'architecture matérielle d'un ordinateur 4 telle qu'illustrée à la figure 3. Cette architecture matérielle comprend notamment un processeur PROC, une mémoire vive MEM, une mémoire morte ROM, une mémoire non volatile NVM, et des moyens COM de communication permettant à la gNB 2 et à l'UE 3 notamment de communiquer entre eux. La mémoire non volatile NVM constitue un support d'enregistrement conforme à l'invention, lisible par le processeur PROC et sur lequel est enregistré un programme conforme à l'invention.

Ce programme, noté PROG2 lorsque l'architecture matérielle de l'ordinateur 4 est celle de la gNB 2, est enregistré dans la mémoire non volatile NVM et comporte des instructions définissant les principales étapes d'un procédé de configuration selon l'invention tel qu'il est mis en oeuvre par la gNB 2 (entité du réseau au sens de l'invention). Il définit plus spécifiquement les modules fonctionnels de la gNB 2, qui s'appuient et/ou commandent tout ou partie des éléments PROC, MEM, ROM, NVM, et COM de l'ordinateur 4 cités précédemment.

Dans le mode de réalisation décrit ici, le programme PROG2 définit notamment les modules fonctionnels suivants de la gNB 2 (représentés sur la figure 2), qui sont activés pour chaque UE de la cellule CELL pour laquelle la gNB 2 est sollicitée pour transmettre en UL ou en DL des données associées à cet UE (plus particulièrement pour l'UE 3 dans l'exemple envisagé ici) :

- un module 2A d'estimation, sur une période de temps déterminée, d'un trafic associé à l'UE en question et relatif au(x) service(s) (ou de façon équivalente ici aux slices) auquel l'UE est connecté;
- un module 2B d'ordonnancement ou ordonnanceur (« scheduler » en anglais), configuré pour, à partir de l'estimation du trafic réalisée par le module 2A, décider des ressources en temps et en fréquence allouées à la transmission de ces flux (PRB alloués à l'UE et instants de transmission de ces PRB) et leur ordonnancement compte tenu notamment des exigences des services relatifs ce trafic indiquées dans les SLA. C'est le module 2B d'ordonnancement qui décide notamment de la BWP et de la numérologie associée à activer par l'UE pour la transmission de ce trafic pour chaque service auquel ce trafic se rapporte ;
- un module 2C de détermination, configuré pour déterminer, en fonction de l'estimation du trafic réalisée par le module 2A d'estimation et de l'ordonnancement réalisé par le module 2B d'ordonnancement, la BWP et la numérologie associée ($BWP_{def}/\mu_{def}$) à utiliser par défaut par l'UE 3, ainsi qu'un délai d'inactivité $T_{inact}$ à appliquer par l'UE pour la transmission de ce trafic et à l'expiration duquel l'UE 3 doit activer la BWP définie par défaut $BWP_{def}/\mu_{def}$. Conformément à l'invention, en présence d'un service prioritaire (par exemple S2 ici), la partie de bande passante $BWP_{def}/\mu_{def}$ par défaut est choisie égale à la BWP et à la numérologie associée affectées par le module 2B d'ordonnancement à ce service prioritaire ; et
- un module 2D d'envoi, configuré pour envoyer à l'UE, dans au moins un message de configuration, le délai d'inactivité $T_{inact}$ et un indicateur désignant ladite partie de bande passante $BWP_{def}/\mu_{def}$ définie par défaut. Dans le mode de réalisation décrit ici, ces messages sont conformes au protocole RRC, et appelés messages RRC. Il convient de noter que l'indicateur désignant la partie de bande passante $BWP_{def}/\mu_{def}$ définie par défaut et le délai d'inactivité $T_{inact}$ peuvent être envoyés dans un même message de configuration ou dans des messages de configuration distincts, notamment en fonction de la fréquence à laquelle ils évoluent respectivement.

Il convient de noter que l'invention s'applique aussi bien en voie montante (UL) qu'en voie descendante (DL). Plus particulièrement, lorsque l'estimation du trafic associé à l'UE réalisée par le module 2A concerne le trafic montant, la BWP définie par défaut est une BWP définie par défaut pour le trafic montant. Il en est de même pour le délai d'inactivité déterminé conformément à l'invention. Inversement, lorsque l'estimation du trafic associé à l'UE concerne le trafic descendant, la BWP définie par défaut et le délai d'inactivité déterminé correspondent respectivement à une BWP définie par défaut pour le trafic descendant et un délai d'inactivité avant de basculer vers cette BWP définie par défaut pour le trafic descendant. Par souci de simplification ici, on utilise les mêmes notations $BWP_{def}/\mu_{def}$ pour désigner la BWP définie par défaut et sa numérologie associée, et $T_{inact}$, pour désigner le délai d'inactivité, qu'on se place en UL ou en DL. Toutefois, une BWP associée à une numérologie $\mu$ différente peut être définie par défaut en UL et en DL, de même qu'un délai d'inactivité $T_{inact}$ différent.

Le fonctionnement des modules 2A à 2D de la gNB 2 est détaillé davantage ultérieurement en référence aux étapes du procédé de configuration selon l'invention. Les modules 2A et 2B sont optionnels, la gNB 2 pouvant obtenir en variante l'estimation du trafic associé à chaque UE lui étant rattaché, et/ou la façon dont ce trafic est ordonnancé d'une autre entité du réseau NW, par exemple pour l'estimation du trafic, d'une fonction réseau d'analyse de données aussi connue sous le nom de fonction réseau NWDAF (pour « NetWork Data Analysis Function » en anglais) dans le contexte d'un réseau 5G.

Le programme d'ordinateur enregistré dans la mémoire non volatile NVM, lorsque l'architecture matérielle de l'ordinateur 4 est celle de l'UE 3, est noté PROG3 et comporte des instructions définissant les principales étapes d'un procédé de communication selon l'invention tel qu'il est mis en oeuvre par l'UE 3. Il définit plus spécifiquement les modules fonctionnels de l'UE 3, qui s'appuient et/ou commandent tout ou partie des éléments PROC, MEM, ROM, NVM, et COM de l'ordinateur 4, cités précédemment.

Le programme PROG3 définit notamment les modules fonctionnels de l'UE 3 suivants (représentés sur la figure 2) :

- un module 3A de réception, configuré pour recevoir au moins un message de configuration (par exemple au moins un message RRC) en provenance d'une entité du réseau conforme à l'invention, et plus particulièrement ici de la gNB 2. Ce ou ces messages de configuration comprennent notamment un indicateur de la BWP définie par défaut $BWP_{def}/\mu_{def}$ et du délai d'inactivité $T_{inact}$ déterminé par la gNB 2 pour l'UE 3 à partir de l'estimation de son trafic ; et
- un module 3B d'application, configuré pour appliquer la BWP définie par défaut $BWP_{def}/\mu_{def}$ et le délai d'inactivité $T_{inact}$ reçus par le module 3A de réception.

Le fonctionnement des modules 3A et 3B de l'UE 3 est détaillé davantage ultérieurement en référence aux étapes du procédé de communication selon l'invention.

Par souci de simplification, bien que comme mentionné précédemment, l'invention s'applique aussi bien en UL qu'en DL, on se limite ici à un accès DL aux services S1 et S2 par l'UE 3, autrement dit à un trafic descendant reçu par l'UE 3 via le réseau NW. L'homme du métier n'aurait aucune difficulté à adapter la description qui suit à la transmission d'un trafic montant, c'est-à-dire émis par l'UE 3 à destination d'une entité distante, qui peut se trouver dans le réseau NW ou en dehors de celui-ci. Il suffit pour cela de transposer ce qui est décrit pour le trafic entrant (DL) au trafic sortant (UL). De façon similaire, l'homme du métier n'aurait aucune difficulté à adapter la description à une transmission combinée d'un trafic montant et descendant, quelle que soit la technique de multiplexage considérée entre UL et DL (TDD (pour « Time Division Duplex » en anglais) ou FDD (pour « Frequency Division Duplex » en anglais), l'invention étant appliquée de façon indépendante à la voie montante et à la voie descendante.

La **figure 4** décrit les principales étapes d'un procédé de configuration conforme à l'invention, dans un mode particulier de réalisation dans lequel il est mis en oeuvre par la gNB 2.

Comme évoqué précédemment, suite à la reconfiguration RRC de l'UE 3 lors de l'établissement de la connexion entre l'UE 3 et la gNB 2, la BWP définie par défaut en DL pour l'UE 3 et le délai d'inactivité au-delà duquel l'UE 3 bascule sur la BWP définie par défaut en DL, sont configurés respectivement avec la partie de bande passante $BWP_{def(0)}/\mu_{def(0)}$ et le délai d'inactivité $T_{inact(0)}$ (étape E00).

Grâce à l'invention, cette BWP définie par défaut et ce délai d'inactivité configurés initialement au niveau de l'UE 3 peuvent être modifiés au cours du temps de façon dynamique par la gNB 2 pour s'adapter au contexte de l'UE 3 (et à sa consommation des services auxquels il est connecté). Dans la suite de la description, on désigne par BWP définie par défaut courante, notée $BWP_{def}/\mu_{def}$, respectivement par délai d'inactivité courant, noté $T_{inact}$, la BWP définie par défaut et la numérologie associée, respectivement le délai d'inactivité, configurés au niveau de l'UE 3 et appliqués à l'instant considéré par l'UE 3. Ainsi, après l'étape E00 de reconfiguration RRC de l'UE 3 :

$$BWP_{def}/\mu_{def} = BWP_{def(0)}/\mu_{def(0)} \text{ et } T_{inact} = T_{inact(0)}.$$

Les étapes du procédé de configuration décrites ci-après illustrent comment ces paramètres courants sont mis à jour par la gNB 2 conformément à l'invention, dans un mode particulier de réalisation.

Plus précisément, la gNB 2 détermine, via son module 2A d'estimation, des caractéristiques du trafic entrant associé à l'UE 3 relatif à chaque service auquel l'UE 3 est connecté, c'est-à-dire auprès duquel l'utilisateur de l'UE 3 a souscrit un abonnement ou négocié un accès (étape E10). Dans l'exemple illustratif envisagé ici, il s'agit des services S1 et S2 pour l'UE 3.

Les caractéristiques du trafic entrant sont estimées par le module 2A d'estimation sur une période de temps donnée, par exemple sur la durée d'une trame (10ms). Bien entendu, une période de temps plus ou moins longue peut être envisagée en variante.

Plus particulièrement, le module 2A d'estimation estime, pour chaque service (ou de façon équivalente ici, chaque slice) auquel l'UE 3 est connecté, la volumétrie (c'est-à-dire le nombre de paquets de données) à transmettre pour l'UE 3 pour chaque flux QoS identifié pour ce service, chaque flux QoS pouvant regrouper plusieurs flux de données de service relatifs à l'UE 3 ayant les mêmes exigences de QoS. Un ou plusieurs flux QoS (et incidemment plusieurs flux de données de service) peuvent être reçus par l'UE 3 en DL pour un même service (autrement dit pour une même slice ici).

Chaque flux QoS est associé, conformément au standard 3GPP, à une valeur 5QI. Les valeurs 5QI sont des nombres scalaires définis de façon standardisée ou non pour différentes catégories de flux (flux GBR (pour « Guaranteed Bit Rate » en anglais), non-BGR (pour « Non-Guaranteed Bit Rate » en anglais) et Delay Critical GBR). Chaque valeur 5QI pointe vers un profil QoS unique, comprenant un ensemble de valeurs attribuées à divers paramètres de QoS à appliquer à tous les flux de données de service liés au flux QoS auquel est affecté cette valeur 5QI. Ces paramètres de QoS incluent par exemple un niveau de priorité, un retard maximum toléré pour un paquet de données (ou PDB pour « Packet Delay Budget » en anglais) (ex. latence ou gigue), un taux d'erreur par paquet de données (ou PER pour « Packet Error Rate » en anglais), un débit garanti, un débit maximal, etc. De plus amples détails sur les valeurs 5QI sont disponibles dans le document 3GPP TS 23.501 intitulé « Technical Spécification Group Services and System Aspects ; System Architecture for the 5G System (5GS); Stage 2 (Release 17) », v17.8.0 (2023-03).

Une valeur 5QI est donc utilisée pour caractériser les paramètres de QoS que doit respecter un flux QoS associé à un service, et incidemment les flux de données de service liés à ce flux QoS. Par exemple, une valeur 5QI égale à 1, associée à un niveau de priorité égal à 20, un PDB de 100ms et un PER de $10^{-2}$, peut être utilisée pour caractériser un flux GBR d'un service de conversation de type voix. Une valeur 5QI égale à 2, associée à un niveau de priorité égal à 40, un PDB de 150ms et un PER de $10^{-3}$, peut être utilisée pour caractériser un flux GBR d'un service de conversation de type vidéo (diffusion en direct ou « live streaming » en anglais) ; etc.

Une telle valeur 5QI est conventionnellement fournie par la gNB 2 à un UE (par exemple ici à l'UE 3) lors de son attachement à la gNB 2, pour chaque flux de données de service susceptible d'être envoyé par l'UE et lié à un flux QoS.

Bien entendu, d'autres indicateurs peuvent être envisagés pour caractériser les exigences en termes de latence d'un flux de données de service associé à un UE (ou d'un flux QoS auquel est lié un tel flux de données de service), comme par exemple un indicateur de classe QoS (ou QCI), un indicateur de priorité reflétant l'exigence en termes de latence du flux de données, etc.

Dans le mode de réalisation décrit ici, le module 2A d'estimation obtient à l'issue de l'étape E10, une matrice de flux QoS entrants associés à l'UE 3, notée FMAT(3). Les colonnes de cette matrice représentent les services (ou slices ici) auxquels l'UE 3 est connecté, tandis que ses lignes correspondent aux différents flux QoS relatifs à chaque service, chaque flux QoS étant associé à une valeur 5QI.

La matrice de flux QoS FMAT(3) obtenue par le module 2A d'estimation contient, pour chaque service (ou slice) auquel l'UE 3 est connecté, et pour chaque flux QoS relatif à ce service associé une valeur 5QI, la volumétrie des flux de données de service (c'est-à-dire le nombre de paquets de données véhiculés dans ces flux) liés à ce flux QoS.

La matrice de flux QoS FMAT(3) a par exemple à l'issue de l'étape E10, la forme représentée à la Table 2 :

[Table 2]

| FMAT(3) | Slice SL(S1) | Slice SL(S2) |
|---|---|---|
| Flux QoS DF1, Valeur 5QI1 | nb1 | 0 |
| Flux QoS DF2 Valeur 5QI2 | nb2 | 0 |
| Flux QoS DF3, Valeur 5QI3 | 0 | nb3 |

où :

- 5QI1 et 5QI2 désignent les valeurs 5QI associées respectivement aux flux QoS DF1 et DF2 relatifs au service non prioritaire S1 (c'est-à-dire les flux QoS susceptibles d'être échangés dans le cadre de ce service). Les valeurs 5QI1 et 5QI2 fournissent notamment les latences (délais PDB) maximales supportées par les flux QoS DF1 et DF2 (et incidemment par les flux de données liés à ces flux QoS). Les flux QoS DF1 et DF2 comprennent respectivement nb1 et nb2 paquets de données (pouvant être véhiculés par plusieurs flux de données de service) ; et
- 5QI3 désigne la valeur 5QI associée au flux QoS DF3 relatif au service prioritaire S2 (c'est-à-dire susceptible d'être échangé dans le cadre de ce service). Cette valeur 5QI3 fournit notamment la latence (délai PDB) maximale supportée par le flux QoS DF3 (et incidemment par les flux de service liés à ce flux QoS DF3). Le flux QoS DF3 comprend nb3 paquets de données (pouvant être véhiculés par plusieurs flux de données de service).

Bien entendu, d'autres formes de matrices ou d'autres structures de données peuvent être envisagées pour collecter les caractéristiques des flux estimées par le module 2A d'estimation.

Les caractéristiques contenues dans la matrice des flux FMAT(3) peuvent être estimées par le module 2A à partir d'informations recueillies auprès d'une ou de plusieurs sources.

Ainsi, par exemple, le module 2A peut obtenir tout ou partie des caractéristiques des flux QoS entrants destinés à l'UE 3 à partir d'informations fournies par la ou les entités distantes à l'origine des flux entrants destinés à l'UE 3. Lorsque l'invention est appliquée au trafic sortant émis par l'UE 3, le module 2A peut obtenir les caractéristiques de ce trafic sortant à partir d'informations fournies par l'UE 3 à l'origine de ce trafic sortant.

Le module 2A d'estimation peut également obtenir tout ou partie des caractéristiques des flux QoS entrants destinés à l'UE 3 à partir d'informations dont la gNB 2 dispose. En effet, la gNB 2 connaît, pour chaque slice du réseau NW, l'identifiant (S-NSSAI) de cette slice, le ou les services qu'elle propose, ainsi que les UE connectés à la slice. Elle est également en mesure de déterminer, en interrogeant la fonction réseau d'accès et de mobilité du réseau NW (appelée fonction réseau AMF pour « Access and Mobility Function » en anglais), les slices auxquelles un UE particulier est autorisé à se connecter autorisées suite à son enregistrement auprès du réseau. La gNB 2 dispose par ailleurs des SLA associés à chaque service fourni par le réseau NW, qui lui permet d'identifier les flux QoS relatifs à ce service ainsi que les valeurs 5QI associées à ces flux QoS (et incidemment, la latence maximale supportée par chaque flux QoS).

Selon une autre possibilité, le module 2A d'estimation peut utiliser pour obtenir tout ou partie des caractéristiques des flux QoS entrants associés à l'UE 3, un modèle de prédiction du trafic entrant associé à l'UE 3, établi pour chaque service offert par le réseau NW auquel l'UE 3 est connecté. Dans l'exemple illustratif considéré ici, où les deux slices SL(S1) et SL(2) sont autorisées pour l'UE 3, et seul le trafic entrant associé à l'UE 3 est pris en compte, un tel modèle MOD(3) comprend deux composantes, une première composante MOD(3,S1) correspondant à un modèle de prédiction de trafic DL établi pour l'UE 3 pour le service S1 (ou de façon équivalente pour la slice SL(S1)) et une deuxième composante MOD(3,S2) correspondant à un modèle de prédiction de trafic DL établi pour l'UE 3 pour le service S2 (ou de façon équivalente pour la slice SL(S2)), soit MOD(3)=[MOD(3,S1) ; MOD(3,S2)]. Un tel modèle de prédiction MOD(3) peut être appris (c'est-à-dire construit et mis à jour jusqu'à converger vers un modèle stable) de façon connue en soi, à partir de données d'apprentissage collectées lors d'une phase préliminaire d'apprentissage, ces données d'apprentissage correspondant aux caractéristiques précitées (flux QoS, valeurs 5QI associées, et volumétrie) déterminées pour les flux entrants associés à l'UE 3 durant la phase d'apprentissage, à chaque fois que l'UE 3 est connecté à un service offert par une slice du réseau NW. Un tel apprentissage peut être supervisé ou non.

Le module 2A d'estimation peut en variante utiliser, pour chaque service auquel l'UE 3 est connecté, un modèle de prédiction du trafic entrant associé à une pluralité d'UE attachés à la gNB 2 et connectés à ce service (la pluralité d'UE est par exemple un groupe d'UE connectés ou autorisés à se connecter aux mêmes slices, ou l'ensemble des UE attachés à la gNB 2).

Selon une autre possibilité encore, tout ou partie des caractéristiques des flux QoS entrants associés à l'UE 3 contenues dans la matrice FMAT(3), peuvent être obtenues par le module 2A d'autres entités du réseau NW ayant une visibilité sur ces flux QoS, comme par exemple d'une fonction réseau NWDAF telle que décrite dans le document 3GPP TS 23.288 intitulé « Technical Spécification Group Services and System Aspects ; Architecture enhancements for 5G System (5GS) to support network data analytics services (Release 17) », v17.8.0 (2023-03).

A partir des caractéristiques du trafic entrant contenues dans la matrice FMAT(3) à l'issue de l'étape E10, le module 2B d'ordonnancement de la gNB 2 décide de l'ordonnancement des paquets de données véhiculés par ces flux (étape E20). Différents types d'ordonnanceurs peuvent être envisagés dans le contexte de l'invention, comme par exemple un ordonnanceur configuré pour ordonnancer les paquets de flux de données appartenant à différentes slices tel que décrit dans le document de M. Raftopoulou et al. intitulé « Optimisation of Numerology and Packet Scheduling in 5G Networks : To Slice or not to Slice », IEEE 93rd Vehicular Technology Conférence, 2021, ou dans le document de X. Zhang et al. intitulé « RB Allocation Scheme for eMBB and uRLLC coexistence in 5G and Beyond », Wireless Communications and Mobile Computing, vol. 2021, 11 octobre 2021. Ces exemples ne sont donnés qu'à titre illustratif et ne sont pas limitatifs en soi des ordonnanceurs pouvant être utilisés dans le contexte de l'invention.

Le module 2B d'ordonnancement affecte ainsi une BWP associée à une numérologie $\mu$, notée BWP/$\mu$, à chaque service auxquels l'UE 3 est connecté (S1 et S2 dans l'exemple envisagé ici), à partir de la connaissance de ces services, de leurs priorités respectives ou de leurs exigences respectives en termes de latence. Le choix effectué par le module 2B d'ordonnancement de la partie de bande passante BWP/$\mu$ à activer pour la transmission des flux QoS relatifs à un service tient compte du SLA associé au service : la BWP et la numérologie $\mu$ choisies permettent en effet de respecter le SLA du service. Par exemple, une partie de bande passante BWP2 (extraite de la bande passante BW(CF) allouée à la cellule CELL) associée à une numérologie $\mu2$ élevée (ex. $\mu2$=3 ou 4 dans la table 1), notée dans la suite BWP2/$\mu2$, est choisie pour les flux QoS relatifs au service S2 prioritaire (flux DF3), tandis qu'une partie de bande BWP1 (extraite de la bande BW(CF) allouée à la cellule CELL) associée à une numérologie $\mu1$ moins élevée (ex. $\mu1$=0 ou 1 dans la table 1), notée dans la suite BWP1/$\mu1$, est choisie pour les flux DF1 et DF2 relatifs au service S1 non prioritaire.

Par ailleurs, le module 2B d'ordonnancement affecte pour chaque flux QoS de la matrice de flux FMAT(3) correspondant à un trafic non nul :

- un ensemble de PRB pour la transmission des paquets de données des flux de données de service liés à ce flux QoS sur la BWP affectée au service auquel se rapporte ce flux QoS ; et
- des instants de transmission (TTI) de ces PRB.

Les parties de bande passante et numérologies BWP/$\mu$ associées, les PRB et les instants de transmission choisis par le module 2B d'ordonnancement pour l'UE 3 pour chacun des flux QoS entrants associés à l'UE 3 sont reportés ici dans la matrice des flux FMAT(3).

Dans le mode de réalisation décrit ici, le module 2C de détermination de la gNB 2 identifie ensuite si l'UE 3 est connecté à un service prioritaire (étape test E30). Ceci peut se faire à partir de l'estimation réalisée lors de l'étape E10 (et donc du contenu de la matrice FMAT(3)), ou à partir des informations dont dispose la gNB 2 concernant les slices auxquels est connecté l'UE 3, comme évoqué précédemment.

Si ce n'est pas le cas (réponse non à l'étape test E30), la gNB 2 ne change pas la configuration de l'UE 3, et en particulier la BWP définie par défaut BWP$_{def}$/$\mu_{def}$ pour le trafic entrant de l'UE 3 et le délai d'inactivité T$_{inact}$ courants appliqués par l'UE 3. Le procédé est repris depuis l'étape E10 pour une nouvelle période de temps sur laquelle le module 2A d'estimation estime le trafic entrant destiné à l'UE 3 (une nouvelle trame dans l'exemple envisagé ici).

Si l'UE 3 est connecté à un service prioritaire (réponse oui à l'étape test E30), comme c'est le cas ici, l'UE 3 étant connecté au service prioritaire S2, le module 2C de détermination détermine si la partie de bande passante courante BWP$_{def}$/$\mu_{def}$ définie par défaut pour l'UE 3 coïncide ou non avec la BWP et la numérologie associée affectées au service prioritaire S2, à savoir ici BWP2/$\mu2$ (étape test E40).

Le cas échéant (réponse oui à l'étape E40), la partie de bande passante courante BWP$_{def}$/$\mu_{def}$ définie par défaut pour le trafic DL de l'UE 3 et configurée au niveau de l'UE 3 est maintenue en l'état (étape E50).

Sinon (réponse non à l'étape E40), le module 2C de détermination met à jour la partie de bande passante

courante BWP$_{def}$/$\mu_{def}$ définie par défaut pour l'UE 3 avec la partie de bande passante affectée au service prioritaire pour l'UL par le module 2B d'ordonnancement (étape E60). Ainsi, dans l'exemple illustratif envisagé ici :

$$BWP_{def}/\mu_{def} = BWP2/\mu2.$$

Le module 2C de détermination détermine également le délai d'inactivité T$_{inact}$ à considérer par l'UE 3 pour basculer sur cette partie de bande BWP$_{def}$/$\mu_{def}$ définie par défaut (étape E70). A cet effet, lors de l'étape E70, le module 2C de détermination tient compte de l'estimation du trafic entrant réalisée par le module 2A d'estimation et mémorisée dans la matrice des flux QoS FMAT(3).

Plus spécifiquement, le module 2C de détermination examine tout d'abord si la matrice des flux FMAT(3) (estimation du trafic entrant au sens de l'invention) indique une absence de trafic, tous services confondus, pour la période de temps sur laquelle elle a été estimée (une trame dans l'exemple envisagé ici) (étape test E71).

Si cela est le cas (réponse oui à l'étape test E71), le module 2C de détermination fixe le délai d'inactivité T$_{inact}$ à sa valeur minimum (étape E72). Dans le cas du standard 3GPP, cette valeur minimum est fixée à 2ms. Bien entendu, d'autres valeurs minimums peuvent être envisagées en variante.

Si au contraire, la matrice des flux FMAT(3) indique la présence de trafic pour l'un au moins des services auxquels l'UE 3 est connecté (réponse non à l'étape test E71), alors pour déterminer le délai d'inactivité T$_{inact}$, le module 2C de détermination examine en outre ici un indicateur de performance de l'UE 3, à savoir la puissance P consommée par l'UE 3 (étape test E73).

Plus précisément, si le module 2C de détermination détermine que la puissance P consommée par l'UE 3 atteint ou dépasse un seuil donné Pmax (réponse oui à l'étape test E73), le module 2C de détermination maintient la valeur courante du délai d'inactivité T$_{inact}$ (étape E74). Pmax est la valeur maximale de la puissance pouvant être consommée par l'UE 3 ; elle est fixée par l'opérateur du réseau NW au regard des limites imposées par la Réglementation en vigueur, et est connue de la gNB 2.

A l'inverse, si le module 2C de détermination détermine que la puissance P consommée par l'UE 3 est inférieure au seuil Pmax (réponse non à l'étape test E73), le module 2C de détermination augmente la valeur du délai d'inactivité T$_{inact}$ par rapport à sa valeur courante (étape E75). Dans l'exemple envisagé ici, il l'augmente d'un nombre déterminé de millisecondes (par exemple 1ms).

Dans un autre mode de réalisation, le module 2C de détermination peut utiliser d'autres indicateurs pour déterminer le délai d'inactivité T$_{inact}$, relatifs aux performance de l'UE 3 ou du réseau (par exemple une latence de chaque service de bout en bout dans le réseau).

Dans un autre mode de réalisation encore, le module 2C de détermination peut déterminer lors de l'étape E70 le délai d'inactivité à appliquer au moyen d'un algorithme ML ou d'AI (par exemple un algorithme d'apprentissage par renforcement, ou par renforcement profond), d'un modèle mathématique ou d'une heuristique.

Puis le module 2D d'envoi de la gNB 2 envoie les paramètres ainsi déterminés (partie de bande passante définie par défaut et numérologie associée, et délai d'inactivité) à l'UE 3 (étape E80).

Dans le mode de réalisation décrit ici, cet envoi se fait via au moins un message de configuration RRC.

Ainsi, si la partie de bande passante BWP$_{def}$/$\mu_{def}$ définie par défaut et le délai d'inactivité T$_{inact}$ ont été tous les deux modifiés au cours des étapes E60 et E72 ou E75, le module 2D envoie un unique message de configuration RRC, comprenant un champ defaultDownlinkBWP-Id contenant un indicateur désignant la partie de bande passante BWP$_{def}$/$\mu_{def}$ décidée à l'étape E60, et un champ bwp-InactivityTimer valorisé avec la valeur du délai d'inactivité T$_{inact}$ déterminée lors de l'étape E72 ou E75. En variante, le module 2D peut envoyer deux messages de configuration RRC, l'un contenant le champ defaultDownlinkBWP-Id contenant un indicateur désignant la partie de bande passante BWP$_{def}$/$\mu_{def}$ décidée à l'étape E60, et l'autre contenant un champ bwp-InactivityTimer valorisé avec la valeur du délai d'inactivité T$_{inact}$ déterminée lors de l'étape E72 ou E75.

Si l'un seulement de ces paramètres a été modifié lors de l'étape E60 ou de l'étape E70, le module 2D envoie un message de configuration RRC comprenant le champ defaultDownlinkBWP-Id ou bwp-InactivityTimer selon le paramètre qui a été modifié, dûment valorisé.

Si aucun des paramètres n'a été modifié lors des étapes E60 et E70, dans le mode de réalisation décrit ici, le module 2D n'envoie aucun message de configuration RRC à l'UE 3. Dans une variante de réalisation, il peut envoyer un ou plusieurs messages avec les indicateur de partie de bande passante et délai d'inactivité maintenus à leurs valeurs courantes respectives et déjà appliquées par l'UE 3.

Dans l'exemple envisagé ici, on suppose que la partie de bande par défaut BWP$_{def}$/$\mu_{def}$ a été modifiée lors de l'étape E60 de même que le délai d'inactivité T$_{inact}$ par application de l'étape E72 ; le module 2D envoie donc à l'UE 3 un message RRC de configuration comprenant le champ defaultDownlinkBWP-Id contenant un indicateur désignant la partie de bande passante BWP2/$\mu$2 sélectionnée à l'étape E60, et un champ bwp-InactivityTimer valorisé avec la valeur du délai d'inactivité T$_{inact}$ réduit à sa valeur minimum de 2ms comme décidé lors de l'étape E72.

Les étapes E10 à E80 sont ensuite réitérées périodiquement, et plus particulièrement pour chaque nouvelle trame dans l'exemple envisagé ici, les valeurs courantes de la bande passante définie par défaut et du délai d'inactivité correspondant à celles déterminées au cours des étapes E60 et E70 respectivement.

Dans un autre mode de réalisation, les étapes E10 à E80 peuvent être répétées sur détection d'un événement particulier (par exemple, un nouveau service autorisé pour l'UE 3, et/ou l'apparition d'un trafic entrant pour un service donné, etc.).

Il convient de noter que dans ces différents modes de réalisation, les étapes E10 à E80 sont exécutées pour déterminer de façon dynamique la partie de bande passante par défaut et le délai d'inactivité approprié pour un UE 3 comme décrit ici. Toutefois, dans un autre mode de réalisation, ces étapes peuvent être exécutées dans un contexte plus statique, par exemple en amont de la reconfiguration RRC de l'UE 3 pour déterminer la partie de bande passante par défaut et le délai d'inactivité à appliquer lorsqu'il est configuré par la gNB 2 lors de l'établissement de sa connexion avec celle-ci (en s'appuyant par exemple sur une prédiction du trafic associé à l'UE 3), ou après cette reconfiguration RRC.

La **figure 5** illustre les principales étapes d'un procédé de communication selon l'invention telles qu'elles sont mises en oeuvre par l'UE 3 suite à l'étape E80, dans un mode particulier de réalisation.

L'UE 3 reçoit, via son module 3A de réception, le ou les messages de configuration RRC envoyés le cas échéant par le module 2D de la gNB 2 lors de l'étape E80 (étape F10). Ce ou ces messages RRC permettent de reconfigurer les valeurs courantes de la BWP définie par défaut et du délai d'inactivité appliquées par l'UE 3 avec les valeurs de la BWP définie par défaut et/ou du délai d'inactivité contenus dans le ou les messages RRC (étape F20).

Suite à cette reconfiguration, le module 3B d'application de l'UE 3 applique ces nouvelles valeurs courantes à la transmission du trafic entrant destiné à l'UE 3 (étape F30), jusqu'à recevoir de nouvelles valeurs le cas échéant de la gNB 2 déterminées pour de nouvelles trames. Autrement dit, suite à cette reconfiguration, à l'expiration du délai d'inactivité $T_{inact}$, l'UE 3 bascule vers la BWP définie par défaut associée au service prioritaire S2.

Ainsi conformément à l'invention, la BWP définie par défaut et le délai d'inactivité sont déterminés en fonction du trafic entrant associé à l'UE 3. Il convient toutefois de noter que d'autres tests que ceux qui viennent d'être décrits pour les étapes E30, E71 et E73 peuvent être envisagés.

Par exemple, dans une variante de réalisation, lors de l'étape E30, le module 2C de détermination peut examiner non seulement si l'UE 3 est connecté à un service prioritaire, mais également si les flux QoS associés à ce service prioritaire ont une valeur de 5QI associée élevée, c'est-à-dire supérieure à un seuil donné (par exemple 82). De tels flux QoS supportent, de façon connue en soi, des valeurs de latence très faibles. Ainsi, dans cette variante de réalisation, le module 2C de détermination met à jour la partie de bande définie par défaut avec la partie de bande affectée au service prioritaire si l'UE 3 est connecté à un service prioritaire et qu'au moins un flux QoS relatif à ce service prioritaire est contraint par une latence inférieure à un seuil donné (ou de façon équivalente ici, que ledit flux QoS a une valeur 5QI supérieure à un seuil donné).

Dans une autre variante de réalisation, lors de l'étape E70, le module 2C de détermination peut examiner non seulement le trafic entrant identifié dans la matrice FMAT(3), mais également une prédiction du trafic entrant ou sortant associé à l'UE 3 pour une période de temps ultérieure déterminée, s'étendant au-delà de la période de temps sur laquelle la matrice FMAT(3) a été estimée. Par exemple, dans cette variante, lors de l'étape E70, le module 2C de détermination peut examiner si la matrice FMAT(3) indique une absence de flux et le cas échéant, si la prédiction confirme cette absence de flux. Ce n'est qu'à ces deux conditions que le module 2C de détermination réduit alors le délai d'inactivité à sa valeur minimale.

Dans une autre variante de réalisation, lors de l'étape test E73, le module 2C de détermination peut examiner un autre indicateur de performance de l'UE 3, et/ou un indicateur de performance du réseau, comme par exemple la latence de bout en bout de chaque service auquel est connecté l'UE 3.

Dans une autre variante de réalisation, le module 2C de détermination peut déterminer lors de l'étape E70 la valeur du délai d'inactivité à appliquer en tenant compte d'une prédiction du trafic entrant pour l'UE 3 et d'éventuelles périodes d'inactivité révélées par cette prédiction.

**Les figures 6 et 7** illustrent, sur un exemple simple, les gains apportés par l'invention.

Dans cet exemple, on envisage la transmission pour un UE d'un flux QoS entrant DF1 relatif au service eMBB S1 offert par la slice SL(S1) sur une partie de bande BWP1 et d'un flux QoS entrant DF2 relatif au service uRLLC S2 offert par la slice SL(S2) sur une partie de bande BWP2.

La figure 6 représente, en l'absence de mise en oeuvre de l'invention, le timing des informations DCI envoyées à un UE pour activer la transmission des flux DF1 sur BWP1 et DF2 sur BWP2. Une BWP par défaut est définie ($BWP_{def}$), différente de BWP1 et de BWP2 vers laquelle l'UE est configurée pour basculer en l'absence de trafic à l'expiration d'un délai d'inactivité $T_{inact}$ avec lequel il a été configuré lors de l'établissement de sa connexion avec la station de base.

Dans ce contexte, certains paquets des flux DF1 et DF2 (ex. paquets marqués d'une croix sur la figure 6) ne peuvent pas respecter l'ordonnancement (PRB, TTI et BWP) prévu pour garantir le SLA des services offerts par les slices SL(S1) et SL(S2), en raison de la BWP active à l'instant de transmission prévue de ces paquets. Ceci se traduit par une qualité de service dégradée pour ces services, et en particulier pour le service prioritaire S2.

La figure 7 représente l'évolution de la situation lorsque l'invention est mise en oeuvre. Tous les paquets des données véhiculés par les flux DF1 et DF2 peuvent avantageusement être transmis conformément à l'ordonnancement et la qualité des services offerts par les slices SL(S1) et SL(S2) est garantie.

Dans le mode de réalisation qui vient d'être décrit, l'entité du réseau 5G NR conforme à l'invention et configurée pour mettre en oeuvre le procédé de configuration selon l'invention est une station de base de type gNB. L'invention s'applique également à d'autres architectures de réseau, et en particulier à une architecture Open-RAN telle que définie par l'Alliance O-RAN.

De façon connue en soi, Open-RAN ou réseau d'accès radio ouvert, propose une évolution des architectures de réseaux mobiles qui s'appuie sur un réseau d'accès radio (RAN pour « Radio Access Network » en anglais) entièrement programmable constitué de fonctions virtualisées et désagrégées. Typiquement, comme illustré sur la **figure 8,** pour un RAN 5G NR, la station de base ou gNB est désagrégée en de multiples unités radio (O-RU pour « Open Radio Unit » en anglais), distribuée (O-DU pour « Open Distributed Unit » en anglais) et centralisée (O-CU pour « Open Centralized Unit » en anglais). Les interfaces entre ces unités (ex. A1, E1, E2, etc.) sont ouvertes et interopérables. Chaque unité est responsable d'une fonction et d'une couche protocolaire spécifiques. Par exemple, l'unité O-RU est responsable de la couche physique inférieure (incluant les traitements de FFT, beam-forming, préfiltrage, etc.), tandis que l'unité O-DU est responsable du scheduling, de la couche physique supérieure et de la couche 2 incluant le protocole MAC (pour « Medium Access Control » en anglais).

Dans cette architecture, les fonctions RAN sont contrôlées et optimisées au moyen d'un contrôleur logiciel intelligent ou RIC (pour « RAN Intelligent Controller » en anglais). Le RIC est repris sous deux formes logiques, chacune réalisant une fonction différente :

- un Non-RT RIC (pour « Non-Real Time RIC » en anglais), qui s'occupe notamment de la gestion des configurations, des dispositifs, des fautes, des performances et du cycles de vie de tous les éléments du réseau, au moyen d'algorithmes intelligents (ex. AI ou ML) opérant sur une échelle temporelle supérieure à 1s ; et
- un Near-RT-RIC (pour « Near-Real Time RIC » en anglais), qui héberge un grand nombre de micro-services ou xApps, s'appuyant sur des algorithmes opérant sur une échelle temporelle comprise entre 10ms et 1s. La détermination et la configuration de la partie de bande passante par défaut et du délai d'inactivité conformément à l'invention entre dans cette catégorie d'algorithmes et peut ainsi, dans un autre mode de réalisation, être implémenté par une xApp 5 hébergée par le Near-RT-RIC. La xApp 5 est une entité (logicielle) du réseau conforme à l'invention, comprenant des modules fonctionnels 5A à 5D similaires ou identiques aux modules fonctionnels 2A à 2D de la gNB 2, décrits précédemment. Ils ne sont pas décrits plus en détail ici.

Les étapes E00 à E80 décrites précédemment sont mises en oeuvre par la xApp 5 dans cet autre mode de réalisation de façon similaire ou identique à ce qui a été décrit précédemment pour la gNB 2, mais impliquent des interfaces de communication propres à l'architecture Open-RAN.

Ainsi, dans cet autre mode de réalisation, les informations utilisées par la xApp 5 provenant de l'UE 3 et de la fonction AMF et/ou de la fonction NWDAF, et éventuellement d'autres entités du réseau NW pour construire la matrice des flux QoS FMAT(3) comme décrit à l'étape E10, sont obtenues par la xApp 5 par l'intermédiaire d'une interface E2. C'est aussi via cette interface que la partie de bande passante définie par défaut et le délai d'inactivité sont fournis par la xApp 5 à l'UE 3.

Si l'utilisation d'un modèle de prédiction de trafic pour l'UE 3 est envisagée pour l'obtention de la matrice des flux FMAT(3), la phase d'apprentissage et la détermination de la matrice des flux FMAT(3) au moyen de ce modèle de prédiction peuvent être implémentées au niveau du Non-RT RIC qui gère les algorithmes d'AI ou de ML. La matrice des flux FMAT(3) en résultant est alors transmise à la xApp 5 hébergée dans le Near-RT RIC via l'interface E1 qui détermine à partir de cette matrice la partie de bande passante par défaut et le délai d'inactivité à appliquer.

Dans un autre mode de réalisation encore, l'entité du réseau conforme à l'invention est hébergée au niveau du Non-RT RIC. Les mêmes interfaces que celles qui viennent d'être décrites précédemment sont alors utilisées.

## Revendications

1. Procédé de configuration, par une entité (2,5) d'un réseau de télécommunications, d'un équipement utilisateur (3) connecté à au moins un service offert par le réseau, ledit procédé comprenant :

   - une étape (E70) de détermination d'un délai d'inactivité à l'expiration duquel ledit équipement utilisateur active une partie de bande passante définie par défaut en fonction d'une estimation d'un trafic associé audit équipement utilisateur relatif audit au moins un service ; et
   - une étape (E80) d'envoi audit équipement utilisateur, dans au moins un message de configuration, dudit délai d'inactivité et d'un indicateur désignant ladite partie de bande passante définie par défaut, ladite partie de bande passante définie par défaut correspondant à une partie de bande passante affectée audit équipement utilisateur pour transmettre un trafic relatif à un service prioritaire parmi ledit au moins un service.

2.  Procédé de configuration selon la revendication 1 dans lequel si ladite estimation du trafic indique une absence de trafic, lors de l'étape de détermination (E72) le délai d'inactivité est fixé à une valeur minimum déterminée.

3.  Procédé de configuration selon la revendication 2 dans lequel le délai est fixé à une valeur minimum déterminée si une prédiction dudit trafic sur une période de temps déterminée confirme en outre l'absence de trafic.

4.  Procédé de configuration selon l'une quelconque des revendications 1 à 3 dans lequel si ladite estimation du trafic indique une activité, lors de l'étape de détermination (E73, E74, E75), le délai d'inactivité est fixé en fonction d'au moins un indicateur de performance dudit équipement utilisateur.

5.  Procédé de configuration selon la revendication 4 dans lequel ledit indicateur de performance est une puissance consommée par l'équipement utilisateur.

6.  Procédé de configuration selon la revendication 5 dans lequel, si la puissance consommée par l'équipement utilisateur atteint ou dépasse un seuil donné, lors de l'étape de détermination (E74), le délai d'inactivité est maintenu à sa valeur courante.

7.  Procédé de configuration selon la revendication 5 ou 6 dans lequel, si la puissance consommée par l'équipement utilisateur est inférieure à un seuil donné, lors de l'étape de détermination (E72), le délai d'inactivité est augmenté par rapport à sa valeur courante.

8.  Procédé de configuration selon l'une quelconque des revendications 1 à 7 dans lequel le délai d'inactivité est déterminé au moyen d'un algorithme ML, Machine Learning, ou d'intelligence artificielle, d'un modèle mathématique ou d'une heuristique.

9.  Procédé de configuration selon l'une quelconque des revendications 1 à 8 dans lequel ledit service prioritaire est un service « ultra Reliable Low Latency Communication », uRLLC.

10. Procédé de configuration selon l'une quelconque des revendications 1 à 9 dans lequel les étapes de détermination et d'envoi sont réitérées périodiquement.

11. Procédé de configuration selon l'une quelconque des revendications 1 à 10 dans lequel ladite estimation du trafic comprend, pour chaque service auquel est connecté ledit équipement utilisateur :

    - une priorité associée audit service ;
    - une volumétrie d'un trafic relatif audit service ;
    - des informations relatives à un ordonnancement des paquets de données relatifs audit service et à une partie de bande passante affectée à ce service pour une transmission desdits paquets de données.

12. Procédé de configuration selon l'une quelconque des revendications 1 à 11 dans lequel ledit au moins un message de configuration est un message RRC (Radio Resource Control).

13. Procédé de communication, par un équipement utilisateur (3) d'un réseau de télécommunications connecté à au moins un service offert par le réseau, ledit procédé de communication comprenant :

    - une étape (F10) de réception d'au moins un message de configuration en provenance d'une entité du réseau, ledit au moins un message de configuration comprenant un indicateur d'une partie de bande définie par défaut et un délai d'inactivité à l'expiration duquel ledit équipement utilisateur doit activer ladite partie de bande passante définie par défaut, ledit délai d'inactivité ayant été déterminé par ladite entité du réseau en fonction d'une estimation d'un trafic associé audit équipement utilisateur relatif audit au moins un service, et ladite partie de bande passante définie par défaut correspondant à une partie de bande passante affectée audit équipement utilisateur pour transmettre un trafic relatif à un service prioritaire parmi ledit au moins un service ; et
    - une étape (F30) d'application de ladite partie de bande passante définie par défaut et dudit délai d'inactivité.

**14.** Entité d'un réseau (2,5) de télécommunications comprenant :

- un module (2C,5C) de détermination, configuré pour déterminer un délai d'inactivité à l'expiration duquel un équipement utilisateur, connecté à au moins un service offert par ledit réseau, active une partie de bande passante définie par défaut en fonction d'une estimation d'un trafic associé audit équipement utilisateur relatif audit au moins un service ; et
- un module (2D,5D) d'envoi, configuré pour envoyer audit équipement utilisateur, dans au moins un message de configuration, ledit délai d'inactivité et un indicateur désignant ladite partie de bande passante définie par défaut, ladite partie de bande passante définie par défaut correspondant à une partie de bande passante affectée audit équipement utilisateur pour transmettre un trafic relatif à un service prioritaire parmi ledit au moins un service.

**15.** Equipement utilisateur (3) d'un réseau de télécommunications comprenant :

- un module (3A) de réception, configuré pour recevoir au moins un message de configuration en provenance d'une entité du réseau, ledit au moins un message de configuration comprenant un indicateur d'une partie de bande passante définie par défaut et un délai d'inactivité à l'expiration duquel ledit équipement utilisateur doit activer ladite partie de bande passante définie par défaut, ledit délai d'inactivité ayant été déterminé par ladite entité du réseau en fonction d'une estimation d'un trafic associé audit équipement utilisateur relatif audit au moins un service, et ladite partie de bande passante définie par défaut correspondant à une partie de bande affectée audit équipement utilisateur pour transmettre un trafic relatif à un service prioritaire parmi ledit au moins un service ; et
- un module (3B) d'application, configuré pour appliquer ladite partie de bande passante définie par défaut et ledit délai d'inactivité.

**16.** Système (1) de communication comprenant :

- au moins une entité d'un réseau de télécommunications selon la revendication 14 ; et
- au moins un équipement utilisateur selon la revendication 15, rattaché à ladite au moins une entité.

[Fig 1]

[Fig 2]

[Fig 3]

[Fig 4]

[Fig 5]

```
                    ┌─────────────────────────┐   ┌ F10
                    │  RX RRC(BWPdef,Tinact)  │
                    └─────────────────────────┘
                               │
                               ▼
                    ┌─────────────────────────┐   ┌ F20
                    │      RECONFIG RRC       │
                    └─────────────────────────┘
                               │
                               ▼
                    ┌─────────────────────────┐   ┌ F30
                    │          APPL           │
                    └─────────────────────────┘
```

[Fig 6]

[Fig 7]

[Fig 8]

**Europäisches Patentamt**
**European Patent Office**
**Office européen des brevets**

# RAPPORT DE RECHERCHE EUROPEENNE

**Numéro de la demande**

EP 24 16 9362

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 934 152 B1 (OFINNO LLC [US]) 5 avril 2023 (2023-04-05) * alinéa [0002] * * alinéa [0086] - alinéa [0087] * * alinéa [0128] * * alinéa [0132] - alinéa [0138] * * alinéa [0142] - alinéa [0143] * * alinéa [0149] - alinéa [0150] * * alinéa [0163] - alinéa [0169] * * alinéa [0175] - alinéa [0176] * ----- | 1-4,8, 10-16 | INV. H04W28/02 H04W28/12 |
| X | WO 2019/084570 A1 (JEON HYOUNGSUK [US]; DINAN ESMAEL [US] ET AL.) 2 mai 2019 (2019-05-02) * abrégé * * alinéa [0164] - alinéa [0167] * * alinéa [0180] - alinéa [0184] * * alinéa [0187] - alinéa [0191] * * alinéa [0237] - alinéa [0244] * * alinéa [0346] - alinéa [0353] * * alinéa [0356] - alinéa [0362] * * alinéa [0370] - alinéa [0374] * * alinéa [0382] - alinéa [0383] * * alinéa [0387] - alinéa [0389] * * alinéa [0395] - alinéa [0400] * * alinéa [0412] - alinéa [0413] * * alinéa [0444] - alinéa [0447] * * alinéa [0453] - alinéa [0454] * ----- | 1-4,9, 10,12-16 | |
| A | ABINADER FUAD ET AL: "Impact of Bandwidth Part (BWP) Switching on 5G NR System Performance", 2019 IEEE 2ND 5G WORLD FORUM (5GWF), IEEE, 30 septembre 2019 (2019-09-30), pages 161-166, XP033665220, DOI: 10.1109/5GWF.2019.8911626 * le document en entier * ----- | 1-16 | |

**DOMAINES TECHNIQUES RECHERCHES (IPC)**

H04W

-/--

Le présent rapport a été établi pour toutes les revendications

| Lieu de la recherche | Date d'achèvement de la recherche | Examinateur |
|---|---|---|
| La Haye | 5 juillet 2024 | Beker, Sergio |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 24 16 9362

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2022/312542 A1 (VENKATRAM KARTHIK [US] ET AL) 29 septembre 2022 (2022-09-29) * alinéa [0082] * * alinéa [0095] - alinéa [0096] * ----- | 1-16 | |
| A | APPLE INC: "Evaluation of UE Power Saving Techniques", 3GPP DRAFT; R1-1902770 EVALUATION OF UE POWER SAVING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20190225 - 20190301 16 février 2019 (2019-02-16), XP051600465, Extrait de l'Internet: URL:http://www.3gpp.org/ftp/tsg%5Fran/WG1%5FRL1/TSGR1%5F96/Docs/R1%2D1902770%2Ezip [extrait le 2019-02-16] * le document en entier * ----- | 1-16 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| La Haye | 5 juillet 2024 | Beker, Sergio |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 16 9362

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-07-2024

| Document brevet cité au rapport de recherche | Date de publication | Membre(s) de la famille de brevet(s) | Date de publication |
|---|---|---|---|
| EP 3934152 B1 | 05-04-2023 | EP 3734892 A2 | 04-11-2020 |
| | | EP 3934152 A1 | 05-01-2022 |
| | | EP 4243557 A2 | 13-09-2023 |
| | | US 2020351067 A1 | 05-11-2020 |
| | | US 2023171075 A1 | 01-06-2023 |
| WO 2019084570 A1 | 02-05-2019 | EP 3568946 A1 | 20-11-2019 |
| | | EP 3611866 A1 | 19-02-2020 |
| | | US 2021167930 A1 | 03-06-2021 |
| | | US 2021336750 A1 | 28-10-2021 |
| | | US 2022294595 A1 | 15-09-2022 |
| | | US 2022368508 A1 | 17-11-2022 |
| | | US 2024072979 A1 | 29-02-2024 |
| | | WO 2019084570 A1 | 02-05-2019 |
| US 2022312542 A1 | 29-09-2022 | CN 117016042 A | 07-11-2023 |
| | | EP 4316184 A1 | 07-02-2024 |
| | | US 2022312542 A1 | 29-09-2022 |
| | | WO 2022203811 A1 | 29-09-2022 |

EPO FORM P0460

Pour tout renseignement concernant cette annexe : voir Journal Officiel de l'Office européen des brevets, No.12/82

**EP 4 447 538 A1**

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. RAFTOPOULOU et al.** Optimisation of Numerology and Packet Scheduling in 5G Networks : To Slice or not to Slice. *IEEE 93rd Vehicular Technology Conférence,* 2021

- **X. ZHANG et al.** RB Allocation Scheme for eMBB and uRLLC coexistence in 5G and Beyond. *Wireless Communications and Mobile Computing,* 11 Octobre 2021, vol. 2021